(19) Europäisches Patentamt / European Patent Office / Office européen des brevets

(11) **EP 3 075 714 B1**

(12) **EUROPEAN PATENT SPECIFICATION**

(45) Date of publication and mention
of the grant of the patent:
**09.08.2017  Bulletin 2017/32**

(51) Int Cl.:
*C03C 3/087* *(2006.01)*       *C04B 41/86* *(2006.01)*
*C03C 8/02* *(2006.01)*        *C03C 8/14* *(2006.01)*
*C03C 8/22* *(2006.01)*        *C03C 10/00* *(2006.01)*
*C04B 41/00* *(2006.01)*       *C04B 41/50* *(2006.01)*
*C03C 10/06* *(2006.01)*       *C03C 10/10* *(2006.01)*

(21) Application number: **15382162.4**

(22) Date of filing: **31.03.2015**

(54) **Glass-ceramic material of albite and/or anorthite exhibing warmth**

GLASKERAMIKMATERIAL AUS WÄRMEABGEBENDEM NATRONFELDSPAT UND/ODER
KALKFELDSPAT

MATÉRIAU VITROCÉRAMIQUE DE ALBITE ET/OU ANORTHITE EXPOSANT DE LA CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.10.2016  Bulletin 2016/40**

(73) Proprietors:
  • **CONSEJO SUPERIOR DE INVESTIGACIONES
    CIENTIFICAS**
    **28006 Madrid (ES)**
  • **Centro Tecnologico Vidres S.L.**
    **12540 Villareal (ES)**

(72) Inventors:
  • **Enriquez Pérez, Esther**
    **28006 Madrid (ES)**
  • **Fernández Lozano, José Francisco**
    **28006 Madrid (ES)**
  • **García García-Tuñon, Miguel Angel**
    **28006 Madrid (ES)**
  • **Cabrera Ibáñez, María José**
    **12540 Villareal (ES)**
  • **Seores Goterris, Jaime**
    **12540 Villareal (ES)**
  • **Villar Castaño, Francisco Javier**
    **12540 Villareal (ES)**
  • **Font De Mora Gozalbo, Joaquín José**
    **12540 Villareal (ES)**

(74) Representative: **Pons**
    **Glorieta Ruben Dario 4**
    **28010 Madrid (ES)**

(56) References cited:
    **EP-A1- 2 759 524    CN-A- 103 755 389**
    **US-A- 3 557 575    US-A- 3 928 047**
    **US-A- 5 200 369**

  • **HE MAN ET AL: "Effect of flux content on the
    fabrication and performance of anorthite-based
    glass-ceramic glazes for recycling of industrial
    solid wastes", GLASS TECHNOLOGY:
    EUROPEAN JOURNAL OF GLASS SCIENCE &
    TECHNOLOGY PART A, SOCIETY OF GLASS
    TECHNOLOGY, SHEFFIELD, GB, vol. 54, no. 5, 1
    October 2013 (2013-10-01), pages 185-191,
    XP001586805, ISSN: 1753-3546**

Remarks:
    The file contains technical information submitted after
    the application was filed and not included in this
    specification

**Description**

The present invention relates to an albite and anorthite glass ceramic material, which exhibits a sensation of thermal warmth and its production process. Furthermore, the present invention relates to the use of this glass-ceramic material for the manufacturing of industrial, structural and ornamental ceramic products.

Therefore, the invention could be included in the field of the ceramics industry.

**STATE OF the ART**

A glazed ceramic product consists of a ceramic product with a coating in the form of vitrified layer or glaze. In the scope of the technology, the glaze is the result of the melting of the layer of coating in the form of powder with a ceramic or metal substrate through a firing process. The powder is melted and when hardened forms a greatly hardened smooth and glassy coverage which provides many functional applications.

In the preparation of glazes, the components are individually dosed and they are generally homogenized by a grinding process with water in ball mills, obtaining aqueous suspensions of said components. The resulting suspension is called barbotine. They can also be dry ground and used in a water suspension and/or dry for special applications. Currently, the digital decoration processes by "inkjet" technology have required suspensions in non-aqueous media and submicron particle sizes. There are various types of glaze depending on the physical function and packaging form. They are largely composed of frits, non-fritted raw materials, additives and ceramic colours. The additives are substances that are added so that the glaze, once ground, has the stability and properties suitable for the intended application.

An glazed ceramic product, such as, for example, a ceramic tile, acquires an water-tight, protective and decorative layer with the glaze, which provides the product with aesthetic qualities and specific technical characteristics, such as water-tightness, hardness and resistance to scratching, acids and abrasion and detergents, they may preserve shiny colours for a long time and it is not combustible.

Among its disadvantages, we can highlight two aspects related to:

- Its tendency to break when subjected to deformations, stresses or an impact, and
- Its ease of easily absorbing heat giving a cold sensation when touched.

The sensation of cold or heat perceived on touching a body is the consequence of heat transmission between both bodies on coming into contact. In the case of solids in direct contact, this heat transfer occurs by thermal conduction. The distribution of temperatures reached in equilibrium depends on the properties of both bodies such as their thermal conductivity, density and specific heat. These properties are determined by the composition of the material and its microstructure.

In insulated ceramic materials, heat conduction occurs via phonons, oscillations of the atoms of the crystalline network that are propagated through the material. In general, the thermal conductivity of the ceramic products ranges between values of 2 to 50 $Wm^{-1}K^{-1}$. Glass and amorphous ceramics have lower thermal conductivity values, since the dispersion of phonons is much more effective when the crystalline structure is highly disorganized and irregular.

The presence of vitreous phase is typical in glazed ceramic products. This is the case of porcelain-type ceramic products, which by definition have more than 8 % vitreous phase, being very typical that the vitreous phase percentage of a porcelain reaches values of up to 60 %. In a ceramic glaze, the proportion of vitreous phase may even exceed those values and be close to 100 %. However, the thermal conductivity values of the glass and porcelain materials range between 1.7 $Wm^{-1}K^{-1}$ for borosilicate glass to 0.8 $Wm^{-1}K^{-1}$ for glazed ceramic floor tiles. These values are less than those corresponding to other materials used as flooring and cladding in constructions such as granite and marble with thermal conductivity values of 3 and 4.5 $Wm^{-1}K^{-1}$ respectively and which are considered as cold materials from the standpoint of thermal warmth.

The porosity of the ceramic materials may have a drastic influence on the thermal conductivity. The pores contain air the thermal conductivity of which is very low, 0.02 $Wm^{-1}K^{-1}$, and provides the porous structure with a decrease in thermal conductivity with respect to the material of greater density. The increase in the pore volume fraction generally leads to reduction in thermal conductivity. Characteristic examples of materials with high porosity are woods, which with density values between 0.55 - 0.85 $kgm^{-3}$ have thermal conductivity values as low as 0.10 - 0.35 $Wm^{-1}K^{-1}$. The thermal conductivity values of polymers are, in general, also very low, in the order of 0.3 $Wm^{-1}K^{-1}$, if they are compared with the ceramic products. In these materials, the heat transfer occurs by vibration, translation and rotation of the molecules. The use of wooden materials or polymeric materials as flooring is widespread in construction and it is considered a benchmark in thermal warmth flooring despite its durability problems, poor resistance to chemical attack and fire.

With the aim of providing a thermal warmth sensation on touching a ceramic product, one of the solutions of the state of the art is to incorporate porosity therein. The addition of hollow particles is used in order to decrease thermal conductivity: when they are incorporated in the surface of glazes (JP2005041741); or when they are incorporated both inside the layer of glaze and in the layer of support (JP2005133337); or by the incorporation of an intermediate layer with porous structure (JP2005139797); or by the incorporation of an intermediate layer with sponge structure (JP2005139796). In these solutions, the improvement in the sensation of thermal warmth is performed without decreasing the stain resistance properties of glazed ceramic surfaces. However, the incorporation of porosity represents a clear worsening in the mechanical response of the glazed ceramic materials, in addition to introducing a greater complexity and cost in the material processing.

Other solutions proposed to provide a sensation of thermal warmth on touching a ceramic product are based on the incorporation of a coating of organic nature (WO2013095308), or in the generation of an inorganic-organic composite product (WO2008122677). As a whole, the composite materials combining organic materials and inorganic materials move away from the state of the art as regards glazed ceramic products since they represent a worsening of the durability and resistance properties of the glazed ceramic products.

The thermal conductivity of the human body is approximately 0.6 $Wm^{-1}K^{-1}$, however, the average conductivity of human skin is 0.34 $Wm^{-1}K^{-1}$. Therefore, a limitation in the state of the art consists of the lack of glazed ceramic products with thermal conductivities close to the values of human skin, but preserving the other characteristic functional properties of glazed ceramic products.

A way of reducing the thermal conductivity of ceramic products requires hindering phonon propagation. The reduction in grain size means a decrease in thermal conductivity since more grain boundaries appear which involve a barrier for heat transmission. In the state of the art, in $BaTiO_3$ ceramic materials, a reduction has been disclosed in thermal conductivity values from 100 $Wm^{-1}K^{-1}$ to 1.2 $Wm^{-1}K^{-1}$ on reducing grain size to sizes of 30 nm (A. Jezowski et al, Influence of crystallite size on the thermal conductivity in BaTiO3 nanoceramics, Appl. Phys. Lett. 90 (2007) 114104). It has also been disclosed that ceramic products with different phases also show an effective reduction in thermal conductivity, since the phonon dispersion ratios are characteristic of each material and, on going from one material to another, they must change their properties (W Pabst, E Gregorová, The sigmoidal average - a powerful tool for predicting the thermal conductivity of composite ceramics, J. Phys. Conf. Ser. 395 (2012) 012021).

Although it is possible to modulate the thermal properties of a ceramic material by the design of its microstructure, ceramic products with thermal conductivity values comparable to the thermal conductivity values of human skin are not disclosed in the state of the art.

A ceramic glaze is characterized in that it has a microstructure which combines a glass matrix wherein different crystalline phases are located. The most common crystalline phases found in a ceramic glaze are quartz, cristobalite, mullite, alumina, zircon, zirconia, celsian, leucite, wollastonite, cordierite, diopside, albite, anorthite or ganhite. The presence of vitreous phase is also common in a ceramic glaze due to its composition. Crystalline glazes are generally multiphase and to develop a single crystalline phase on a majority basis requires complex processes which are far removed from industrial processes.

A strategy to obtain ceramic glazes with multiple interfaces corresponds to glass-ceramic interfaces. A glass-ceramic is a polycrystalline solid that contains a residual vitreous phase and is obtained by melting and solidification of inorganic vitreous compositions susceptible to controlled crystallization. The controlled crystallization process is the separation of a crystalline phase from the precursor glass in the form of crystals of reduced size, where the number of crystals, growth rate and final size are a consequence of the thermal cycle performed. To obtain a glass-ceramic material, a high number or crystalline nuclei are required distributed homogeneously throughout the volume and which reach grain sizes between 0.1 and 1 $\mu$m with the temperature increase until the crystalline phase represents > 50 % of the original volume of the glass. The glass-ceramics which give rise to the best properties are those which achieve a crystallization greater than 90 % of the vitreous mass with crystal sizes between 0.5 and 1 $\mu$m. The separation of phases to achieve the production of glass-ceramic materials from silicate glass occurs when nucleants in the form of cations whose coordination number varies with temperature such as Ti and Zr or cations with a charge different to that of silicon such as $Fe^{2+}$ and $P^{5+}$ and/or anions with charge different to that of oxygen such as $F^-$ or cations with high field intensity such as $Cr^{3+}$, $Li^+$ or $Mg^{2+}$. The nucleants used in the state of the art produce translucent and largely coloured glass-ceramics since the majority of the nucleating agents also act as cromophore agents.

The production of glass-ceramics with $\beta$-spodumene crystalline structure in the $Li_2O.Al_2O_3.nSiO_2$ system is defined in the state of the art (US3445252). The formation of the crystals requires later thermal treatments of the melted and solidified product using two-stage processes at temperatures between 800 °C and 900 °C and suitable residence times to favour the nucleation and crystallization processes, respectively. The crystals are gradually and constantly developed with heating rates not greater than 5 °Cmin$^{-1}$. Both the nucleation and growth temperatures and the heating rates are very limiting. The translucent glass-ceramics with $\beta$-quartz or $\beta$-eucryptite crystalline structure (US5017519) also have good mechanical resistance. The coefficients of thermal expansion of glass-ceramics with $\beta$-spodumene, $\beta$-quartz or $\beta$-eucryptite crystalline structure with values close to 0 °C$^{-1}$ are too low to be applied as glazes on most ceramic products. Another limitation of these materials to be used as glazes to provide thermal warmth is that their thermal conductivity values are in the range of 0.9 - 1.7 $Wm^{-1}K^{-1}$.

The translucent glass-ceramics suitable to be used as ceramic glazes in ceramic products have been developed based on compositions which give rise to crystallizations with crystalline structure of feldspars such as anorthite and albite. In general, glass-ceramics with feldspar structure are of great interest since said crystallizations have a positive effect on the improvement in the mechanical properties of glazes.

The production of glazes with anorthite crystallizations is known (A.Tunali et al. Production and characterisation of granulated frit to achieve anorthite based glass-ceramic glaze. J. Eur. Ceram. Soc. 35,1089-1095,2015) where using suitable treatments and adjustments of composition it modifies the size of the anorthite crystals with the aim of obtaining glass-ceramics with transparent matt appearance where the transparency is provided by the vitreous phase wherein the crystallizations of anorthite are found.

The production of glazes with crystallizations of albite is known in the state of the art (ES2444740) and the glazes developed are characterized by their transparency and that they are based on vitreous phase contents > 70 %, being in practice glass glazes with a limited percentage of crystallizations. The crystallization of albite is extremely difficult to achieve and albite compositions are avoided in the production of glass-ceramics. To obtain glass-ceramics with majority albite phase complex sol-gel chemical processes are used which must require the addition of seeds in the form of anorthite crystals (C. Liu et al. Crystallization of Anorthite-Seeded Albite Glass by Solid-State Epitaxy, J. Am. Ceram Soc. 75, 10. 26675-80.1992). EP-A-2759524 discloses bactericidal ceramic enamels including albite and anorthite as crystal phases. To date, the sensation of thermal warmth of ceramics has been exclusively treated from the standpoint of effective thermal conductivity. The most common approach has been to generate porous materials and the properties of the interfaces have scarcely been explored. The dynamic aspect of heat transmission has been taken into account when tackling the problem of thermal warmth. In general, the state of equilibrium fundamentally depends on effective thermal conductivity. However, the sensation of cold or heat does not only depend on the temperature reached in the equilibrium between two bodies, but also on the rate said equilibrium reaches. A limitation of the state of the art is the lack of definition of a factor which allows quantifying the sensation of thermal warmth.

Therefore, the development is necessary of new ceramic materials that display thermal warmth, particularly to be able to use this type of materials in cold climates.

## DESCRIPTION of THE INVENTION

The present invention has the following advantages with respect to the glass-ceramic products found in the state of the art:

- the glass-ceramic material has a vitreous phase in a proportion less than 18 % with respect to the total weight of the glass-ceramic material;
- the values of thermal conductivity of the glass-ceramic materials are less than 0.50 $Wm^{-1}K^{-1}$, between 0.25 and 0.5 $Wm^{-1}K^{-1}$;
- the compositions used are based on minerals highly abundant in nature;
- it has a high whiteness with L-coordinate values greater than 86, reaching whiteness values of up to 96.5 which allows four-colour decoration process applications using digital decoration;
- the glass-ceramic material developed is compatible with the ceramic products based on silicates and their industrial production processes;
- the glass-ceramic material of the invention has achieved a mechanical resistance to bending greater than 110 MPa;
- the glass-ceramic material of the invention has a negative thermal warmth factor TWF;
- The sintering process of this glass-ceramic material is carried out by rapid sintering in treatments lasting less than 120 minutes at temperatures between 980 °C and 1280 °C

The term "glass-ceramic" is understood in the present invention as a polycrystalline ceramic material generally formed through the controlled devitrification of a precursor in vitreous phase. It is a hard material, vitrified throughout its mass and very compact, which has the essential characteristic of low and closed porosity, mechanical properties such as resistance to breaking and resistance to wear, resistant to chemical attack and practically impermeable. In this invention, the term glass-ceramic glaze relates to a glaze that is of glass-ceramic nature.

The term "thermal warmth" is understood in the present invention as the absence of sensation of cold that a person experiences when touching a foreign body. Although the sensation of cold is subjective, it is regulated by heat receptors that are a set of ion channels that are activated by different physiological temperatures.

In the present invention, a parameter called Thermal Warmth Factor (TWF), as an adimensional parameter that defines the degree of heat transfer from one hot body area to a body of lower temperature in the initial contact time.

For the determination of the TWF, the dynamic variation has been established of the temperature the hot body experiences on coming into contact with a body with a temperature lower than 30 °C, the temperature of the hot body being 40 °C since it is a temperature slightly higher than that corresponding to the human body, but similar. The body at a lower temperature is kept at 10 °C. The TWF value is determined in a material with respect to the temperature gradient that the two reference materials experience after a certain time. The reference materials have been selected from materials used as standard materials in thermal conductivity calibration equipment using the heat flow method.

The materials used as reference are a Vespel polymer with a thermal conductivity value of 0.37 $Wm^{-1}K^{-1}$, and steel material with a high thermal conductivity value of 14.2 $Wm^{-1}K^{-1}$. The TWF value is obtained for different temperatures, such as, for example, example 2 s, 30 s, 50 s or 300 s, although not limited to these examples.

The TWF value is normalized with respect to a corresponding scale the TWF value = 2 with the TWF value of the Vespel polymer, and the TWF value = 12 with the TWF value of the steel.

Therefore, the TWF value is determined using the following formula:

$$FCT = \frac{\Delta T - \Delta T_{vespel}}{\Delta T_{steel} - \Delta T_{vespel}} \cdot 10 + C$$

With $\Delta T$ being the temperature differential of the sample to measure for a time t with respect to the initial temperature, in this case 40 °C, and $\Delta T_{vespel}$ and $\Delta T_{steel}$ the temperature differentials for the reference samples for a time t with respect to the initial temperature, in this case 40 °C. C is an experimental constant which has a value approximate to 2.

In this way, if the TWF of the material to study approximates 2, it will have a similar behaviour to that of the polymer, and there we will have a "comfort" material or "which exhibits thermal warmth". And if it approximates 12 we will have a highly heat conductor material, comparable with steel. A TWF value less than 2 implies a material with features of thermal comfort or thermal warmth greater than those of the Vespel polymer.

In a first aspect, the present invention relates to a glass-ceramic material as defined in claim 1 (called "glass-ceramic material of the invention") which exhibits a sensation of thermal warmth, characterized in that it has a thermal conductivity between 0.25 and 0.5 $Wm^{-1}K^{-1}$ and in that it comprises albite microcrystals and nanocrystals $NaAlSi_3O_8$ and, optionally, anorthite microcrystals and nanocrystals $CaAl_2Si_2O_8$ and vitreous phase, where the microcrystals are separated by a region formed by the nanocrystals and the vitreous phase, where said vitreous phase is in a proportion less than 18 % with respect to the total weight of the glass-ceramic material.

In the present invention, the microcrystals that form the glass-ceramic material of the invention are isolated from one another, in the exceptional cases that they are connected, their degree of percolation is very low. The region that separates the microcrystals formed by nanocrystals and vitreous phase is continuous. The vitreous phase is minority and its degree of percolation is also low, i.e. it does not in itself form a single continuous phase in the glass-ceramic material of the invention.

The glass-ceramic material of the invention is obtained by devitrification of the mixture formed by the frit obtained and the kaolin. The frit has a largely amorphous structure resulting from the sudden cooling process from its melted state and it may contain a proportion by weight of crystalline phases of remains of raw materials < 10 % resulting as infused during the fritting process. The frit particles have a radial devitrification process from the surface. However, this devitrification is not complete. During the production process of the glass-ceramic material of the invention the surface size of the particles is increased by grinding so that it produces a decrease in crystal size. The devitrification is more effective when laminar kaolin particles are found on the surface of the frit particles. The kaolin used is characterized in that it has a content expressed in terms of equivalent oxide of $Al_2O_3$ greater than 30 wt% and a joint content of divalent and monovalent cations expressed in terms of equivalent oxides XO, where X = Mg, Sr, Ba, Ca, Pb or Zn, and $X'_2O$, where X' = Na, K or Li, less than 5 wt%. The kaolin particles sequestrate glass network forming cations and this process reduces the vitreous phase percentage in the microstructure of the glass-ceramic glaze. The proportion of frit and kaolin produces a high degree of devitrification when the ratio is between 24 parts of frit per 1 part of kaolin and 4 parts of frit per 1 part of kaolin. Thus, the glass-ceramic materials of the present invention have an advantage compared with those in the state of the art since preferential heat transmission paths are not established using phonons through the microcrystal network. The manner in which the phonons are dispersed through the material of the invention reduces thermal conductivity and favours the sensation of thermal warmth.

The glass-ceramic material of the invention comprises a $\alpha$ ratio defined as

$$\alpha = \frac{\%Al_2O_3}{\Sigma\%XO + \Sigma\%X'_2O}$$

which corresponds to the ratio in percentage of the equivalent oxide of $Al_2O_3$ compared with the sum in percentage expressed in terms of the equivalent oxides of glass network forming cations, fundamentally divalent and monovalent cations of oxides XO, where X = Mg, Sr, Ba, Ca, Pb or Zn, and X'$_2$O, where X' = Na, K or Li. The $\alpha$ ratio determines the solubility of the alumina in the vitreous phase. If the value of $\alpha$ is greater than 1.2 it causes the devitrification of crystalline phases of high thermal conductivity in the material.

The glass-ceramic material of the present invention is characterized in that it has values of $\alpha$ less than 1.1, even less than 0.9. In this way, the compositions of glass-ceramic material of the present invention are advantageous as it shows an absence of crystalline phases of high thermal conductivity in its microstructure.

The glass-ceramic material of the present invention is characterized in that it largely has a feldspar-type structure with general formula AB$_4$O$_8$ where cation A is a cation of large size and low charge such as Mg, Sr, Ba, Ca, Pb Zn, Na, K or Li and B is a cation comprising Si and Al. The anorthite phase of general formula CaAl$_2$Si$_2$O$_8$ and the albite phase of general formula NaAlSi$_3$O$_8$ belong to the group of minerals of feldspar structure. Each B cation is tetrahedrically surrounded by 4 oxygens. The presence of cations with different charge in B positions implies that to maintain the electroneutrality of the crystalline cell it also produces the presence of cations A with divalent and monovalent nature. Among the cations A, the presence of Sr is an advantage since its ionic radius is sufficiently large to prevent the collapse of the structure of tetrahedrons, but sufficiently small to favour highly disorded structures in the crystalline phases of the glass-ceramic materials that are suitable to prevent the transmission of the network phonons.

In the present invention, the microcrystals are called "purely albite" when the proportion of albite is greater than 90 % and the proportion of anorthite is less than 10 %.

In the present invention, the microcrystals are called "purely anorthite" when the proportion of anorthite is greater than 90 % and where the proportion of albite is less than 10 %.

With the term "albite and anorthite microcrystals" the present invention also includes mixture of other proportions different to those of purely albite or purely anorthite, provided that the sum of the percentages is of 100 %, any proportion would be considered in the definition of mixture. In the present invention, the term "albite and anorthite microcrystals" refers not only to crystalline phases but also to their solid solutions.

The coefficient of thermal expansion in the range of temperatures between 50 °C and 300 °C is less than 55·10$^{-7}$ °C$^{-1}$ for purely albite microcrystals and is less than 66·10$^{-7}$°C$^{-1}$ for purely anorthite microcrystals. The glass-ceramic material of the invention comprises anorthite microcrystals and nanocrystals CaAl$_2$Si$_2$O$_8$. The glass-ceramic material of the invention gives a sensation of thermal warmth and is characterized in that it has a thermal conductivity between 0.25 and 0.5 Wm$^{-1}$K$^{-1}$ and it is characterized in that it comprises albite microcrystals and nanocrystals NaAlSi$_3$O$_8$ and anorthite microcrystals and nanocrystals CaAl$_2$Si$_2$O$_8$, where the microcrystals are separated by a region formed by the nanocrystals and the vitreous phase, where said the vitreous phase is in a proportion less than 18 % with respect to the total weight of the glass-ceramic material. The albite microcrystals that form the glass-ceramic material of the invention have elongated morphologies with smaller diameter between 300 nm and 1500 nm and larger diameter between 1.5 $\mu$m and 8 $\mu$m. The anorthite microcrystals that form the glass-ceramic material of the invention have elongated morphologies with smaller diameter of between 200 nm and 500 nm and larger diameter of between 5 $\mu$m and 30 $\mu$m. The glass-ceramic material of the invention contains at least a weight percent with respect to the end material expressed in terms of the following equivalent oxides:

- between 45 % and 68 % of SiO$_2$,
- between 15 % and 27 % of Al$_2$O$_3$,
- between 4.5 % and 13 % of CaO,
- between 0 % and 9 % of SrO,
- between 1 % and 5.5 % of Na$_2$O,
- between 1 % and 5 % of K$_2$O,
- between 0 % and 2 % of B$_2$O$_3$,
- between 0 % and 14 % of ZrO$_2$,
- and between 0 % and 5 % of MgO, BaO and ZnO.

Preferably, the weight percent with respect to the SiO$_2$ end material is between 45 % and 68 %. More preferably, the weight percent with respect to the end material expressed in terms of equivalent oxides of SiO$_2$ is between 49 % and 60 %.

Preferably, the weight percent with respect to the Al$_2$O$_3$ end material is between 17 % and 25 %. More preferably, the weight percent with respect to the end material expressed in terms of equivalent oxides of Al$_2$O$_3$ is between 19 % and 23 %.

Preferably, the weight percent with respect to the CaO end material is between 6 % and 12 %. More preferably, the weight percent with respect to the end material expressed in terms of equivalent oxides of CaO is between 7.5 % and 11 %.

Preferably, the weight percent with respect to the end material expressed in terms of equivalent oxides of SrO is between 0 % and 9 %.

Preferably, the weight percent with respect to the end material in equivalent oxides of $Na_2O$ is between 1.5 % and 4 %. More preferably, the weight percent with respect to the end material expressed in terms of equivalent oxides of $Na_2O$ is between 2 % and 3.5 %.

Preferably, the weight percent with respect to the end material expressed in terms of equivalent oxides of $K_2O$ is between 1.5 % and 4 %. More preferably, the weight percent with respect to the end material expressed in terms of equivalent oxides of $K_2O$ is between 2 % and 3 %.

In another preferred embodiment, the glass-ceramic material of the invention further comprises zirconia crystals $ZrO_2$ or zirconium silicate crystals $ZrSiO_4$, where said crystals are distributed throughout the region of nanocrystals and vitreous phase that separate the microcrystals of the glass-ceramic material, and is characterized in that the material displays a thermal conductivity between 0.31 and 0.45 $Wm^{-1}K^{-1}$.

The addition of zirconia crystals $ZrO_2$ or zirconium silicate crystals $ZrSiO_4$ increases the percentage of crystalline phase of the glass-ceramic material of the invention and also provides whiteness and hardness. Whiteness is a highly desired property in the sector for decoration applications, for example, to enhance the yield of four-colour process by digital decoration.

In a preferred embodiment, the zirconia crystals $ZrO_2$ may be in the form of cubic, tetragonal or monoclinic crystalline phase.

In another preferred embodiment, the zirconia crystals $ZrO_2$ have an average size of between 50 and 200 nm.

In another preferred embodiment, the zirconium silicate crystals $ZrSiO_4$ have an average size of between 200 nm and 500 nm.

Preferably, the weight percent in equivalent oxides of the zirconia crystals $ZrO_2$ or of the zirconium silicate crystals $ZrSiO_4$ with respect to the total weight of the glass-ceramic material is between 2 % and 14 %. More preferably, between 2 % and 8 %.

The glass-ceramic material of the invention may further comprise crystals of quartz, cristobalite, alumina, diopside, wollastonite, spinel, garnet, cordierite, willemite or rutile. The inclusion of these crystals as part of the glass-ceramic material of the invention has the purpose of providing transparency, colour, melting capacity or coefficient of expansion thereto.

A second aspect of the invention relates to the production process of the glass-ceramic material of the invention as defined in claim 17 comprising the following stages:

a) melting at least one compound selected from the list comprising sassolite $H_3BO_3$, quartz $SiO_2$, dolomite $CaMg(CO_3)_2$, calcium carbonate $CaCO_3$, zincite $ZnO$, kaolin $Al_2Si_2O_5(OH)_4$, strontianite $SrCO_3$, alumina $Al_2O_3$, calcium phosphate $Ca_3(PO_4)_2$, a zirconium compound selected from among zirconia $ZrO_2$ or zirconium silicate $ZrSiO_4$ and an alkali feldspar selected from among albite $NaAlSi_3O_8$ and anorthite $CaAl_2Si_2O_8$, or any combination thereof, a temperature of between 1400 °C and 1550 °C and fritting;
b) grinding the frit obtained in stage a) with kaolin;
c) forming the product obtained in b);
d) sintering the product formed in c) at temperatures of between 980 °C and 1280 °C.

The final composition of the material expressed in terms of equivalent oxides is the following:

- between 45 % and 68 % of $SiO_2$,
- between 15 % and 27 % of $Al_2O_3$,
- between 4.5 % and 13 % of CaO,
- between 0 % and 9 % of SrO,
- between 1 % and 5.5 % of $Na_2O$,
- between 1 % and 5 % of $K_2O$,
- between 0 % and 2 % of $B_2O_3$,
- between 0 % and 14 % of $ZrO_2$,
- and between 0% and 5 % of MgO, BaO and ZnO.

In a preferred embodiment, the percentage of the frit obtained in stage a) is between 70 % and 96 wt% in stage b).

In another preferred embodiment, the percentage of kaolin is between 4 % and 15 wt% in stage b).

The product obtained in stage b) can be dried by atomization or combining press filter and dryer processes.

Stage c) of forming of the product obtained in stage b) can be carried out by uniaxial pressing, isostatic pressing or extrusion of ceramic bodies.

Preferably, stage c) of forming of the product obtained in b) is carried out to obtain the glass-ceramic material of the invention in the form of floor tile or in the form of glaze.

When one wants to form the product obtained in stage b) in the form of glaze coating a ceramic product, the glass-ceramic material of the invention can be directly deposited on a ceramic product such as porcelain stoneware or porcelain stoneware coated by slip.

Any person skilled in the art would serve to deposit the glaze formed by the glass-ceramic material of the invention, preferably using standard techniques of spraying or bell-shaped glaze application.

Stage d) of sintering of the product formed in stage c) can be carried out in a continuous or discontinuous oven, preferably it is carried out in a rapid single-channel roller kiln.

Preferably, stage d) of sintering of the product formed in stage c) is carried out at temperatures of between 1100 °C and 1220 °C.

Stage d) of sintering can be carried out by rapid sintering cycles at heating or cooling rates of between 30 and 55 °C/min providing a significant energy saving. The rapid sintering cycles represent an advantage over the conventional sintering cycles of glass-ceramic materials with heating rates less than 5 °C/min and isothermal periods at intermediate temperatures to favour crystallization, such as, for example, maintaining at 900 °C 4 hours during the heating ramp.

In a preferred embodiment, the process of the invention is characterized in that it comprises an additional stage e), after stage d) of sintering, of rectifying and polishing with abrasives. Preferably, the abrasives are selected from the list comprising diamond, silicon carbide or magnesite. By this stage e), surfaces of the glass-ceramic material of the invention are obtained with specular reflection of interest for decoration.

Another aspect of the invention relates to the use of the glass-ceramic materials of the invention for the manufacturing of industrial, structural or ornamental ceramic products as defined in claim 21. In the present invention, the term "industrial, structural or ornamental ceramic products" is understood as a ceramic piece which makes it possible to form or coat a surface, whether horizontal or vertical, internal or external, straight or curved which is used as an element which forms part of a structure or which is used as decorative motif and industrial means are used in its production.

In a preferred embodiment, it relates to the use of the glass-ceramic material of the invention for the manufacturing of floor tiles or glazes of floor tiles with applications in floors, walls and facades.

The glass-ceramic materials formed in the form of floor tiles have a density of between 2.4 and 2.8 $kgm^{-3}$ and closed porosity.

In the present invention, "closed porosity" is understood as the porosity which is impermeable to boiling water. It is a porosity which is in the interior of a ceramic body.

The decrease in percentage of porosity of the glass-ceramic material of the present invention is achieved by the addition of a flux in the form of feldspar or of a frit of a greater flux in percentages of up to 30 wt%. The decrease in porosity gives improved resistance to stains that occur on the surface of the glass-ceramic material of the invention coming to behave as a glass-ceramic material with glazed surface.

The glass-ceramic glaze is formed on a ceramic "substrate or support" which may optionally be previously coated with a layer of slip. The thicknesses of the glass-ceramic glazes are between 50 and 1000 $\mu m$.

In another preferred embodiment, it relates to the use of the glass-ceramic material of the invention for the manufacturing of tiles for flooring and cladding and roof tiles.

In another preferred embodiment, it relates to the use of the glass-ceramic material of the invention for the manufacturing of ceramic pieces of electrical appliances.

In another preferred embodiment, it relates to the use of the glass-ceramic material of the invention for the manufacturing of ceramic pieces for costume jewellery and jewellery.

In another preferred embodiment, it relates to the use of the glass-ceramic material of the invention for the manufacturing of sanitary ware and furniture.

In another preferred embodiment, it relates to the use of the glass-ceramic material of the invention for the manufacturing of crockery.

The last aspect of the invention relates to the use of the glass-ceramic material of the invention as thermal insulator as defined in claim 23. Throughout the description and the claims the word "comprises" and its variants are not intended to exclude other technical characteristics, additives, components or steps. For persons skilled in the art, other objects, advantages and characteristics of the invention will be inferred in part from the description and in part from the practice of the invention. The following figures and examples are provided by way of illustration, and are not intended to limit the present invention.

## BRIEF DESCRIPTION OF THE FIGURES

FIG.1. Powder X-ray diffractogram of the sample of example 1 sintered at 1100 °C. A1: Albite; S: Tetragonal silica, Zt: Tetragonal zirconia.

FIG. 2. Scanning electron microscope micrographs of the polished surface and surface chemically attacked with HF of the sample of example 1 sintered at 1100 °C, showing the microcrystallizations of albite (1) and a region with nanoparticles (2).

FIG. 3. Scanning electron microscope micrographs of the polished surface and surface chemically attacked with HF of the sample of example 1 sintered at 1220 °C, showing the microcrystallizations of albite (1) and a region with nanoparticles (2).

FIG. 4. Diagrammatic figure of the crystallizations present in the micrographs of the sample of example 1 sintered at 1100 °C differentiating the albite microcrystals (1) and the region with nanoparticles which separates them (2).

FIG. 5. Powder X-ray diffractogram of the samples of example 2. A1: Albite; Zc: Zirconia (cubic); Zo: Zirconia (orthorhombic); Zm: Zirconia (monoclinic); ZSt: Tetragonal zircon; S: Tetragonal silica.

FIG. 6. Scanning electron microscope micrographs of the polished surface and surface chemically attacked with HF of the sample of example 1 sintered at 1220 °C with 4 % (figure 6a) and 10 % Zircon (figure 6b), showing the microcrystallizations of albite (1) and the region with nanoparticles (2), of zirconia (3) and of zircon (4).

FIG. 7: Diagrammatic figures of the crystallizations observed in the micrographs of example 2 sintered at 1220 °C with 4 % Zr and 10 % Zr (figure 7a and 7b respectively). Figure 7a shows the albite microcrystals (1), the region with nanoparticles that that separates the crystals (2) and zircon (4) and zirconia (3) crystals. Figure 7b shows area 4, which corresponds to areas 1 and 2 of Figure 7a, the zircon (4) and/or zirconia (3) crystals and the pores (5).

FIG. 8. Powder X-ray diffractogram of the sample of example 3. A1: Albite; A2: Anorthite; Zt: Zirconia (tetragonal); Zm: Zirconia (monoclinic); ZSt: Tetragonal zircon;

FIG. 9. Scanning electron microscope micrographs of the polished surface and surface chemically attacked with HF of the sample of example 3, showing the crystallizations of anorthite (7) and the region with nanoparticles (8), crystallizations of zirconia (3) and zircon (4).

FIG. 10: Diagrammatic figure of the crystallizations present in the micrographs of the sample of example 3 differentiating the anorthite microcrystals (7), the region with nanoparticles (8) and the crystallizations of zircon (4) and zirconia (3).

FIG. 11: X-ray diffractogram of the samples of example 4. A1: Albite; A2: Anorthite; S: Tetragonal silica; Zt: Tetragonal zirconia; Zm: Monocyclic Zirconia.

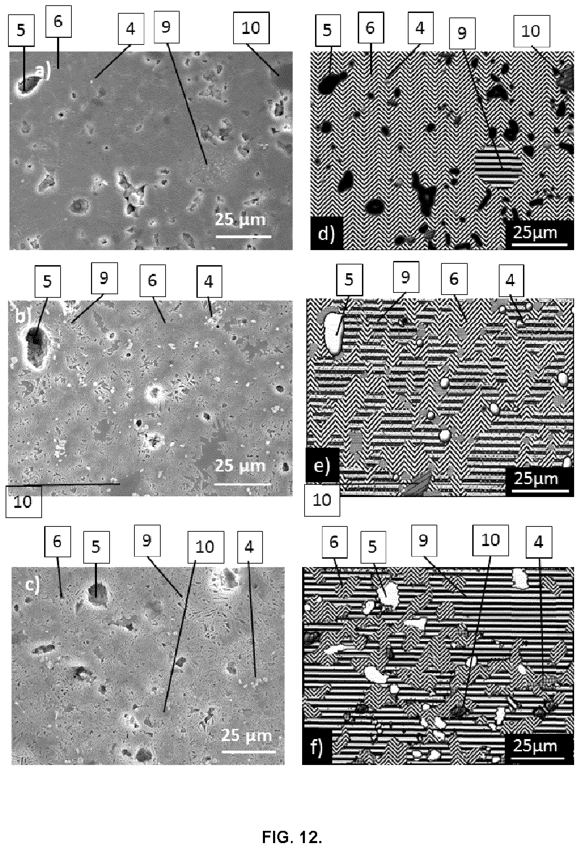

FIG. 12. Scanning electron microscope micrographs of the polished surface and surface chemically attacked with HF of the sintered mixtures of example 4 with a 90 % - 10 % (mixture 1, figure 12a), a 50 % - 50 % (mixture 2, figure 12b) and 10 % - 90 % (mixture 3, figure 12c) of the frits obtained in example 1 and 3, respectively. Likewise, the diagrammatic figures are also observe showing each type of crystallization present in the microstructure of the sintered mixtures of example 4 for mixture 1 (figure 12d), mixture 2 (figure 12e) and mixture 3 (figure 12f), where the numbers represent: (6) phase 1 and 2 of example 1; (9) phase 7 and 8 of example 3; (4) zircon; (5) pore; (10) quartz.

FIG. 13: X-ray diffractogram of the samples of example 5. M: Mullite; A1: Albite; S: Tetragonal silica; A3: Alumina.

FIG. 14. Scanning electron microscope micrographs of the polished surface and surface chemically attacked with HF of the samples of example 5, showing the crystallizations of mullite (11) and nanocrystallizations (12), crystallizations of albite (1) and of zirconia (3) and of zircon (4), and vitreous phase (13).

Fig.15: X-ray diffractogram of the conventional matt glaze comparative of example 7. A1: Albite; A2: Anorthite; Q: Quartz; ZSt: Tetragonal zircon.

FIG. 16. Scanning electron microscope micrographs of the polished surface and surface chemically attacked with HF of the samples of the comparative conventional matt glaze on the support of example 7, showing the crystallizations of anorthite (7) and vitreous phase (13), crystallizations of zirconia (3) and of zircon (4), of quartz (10) and pores (5).

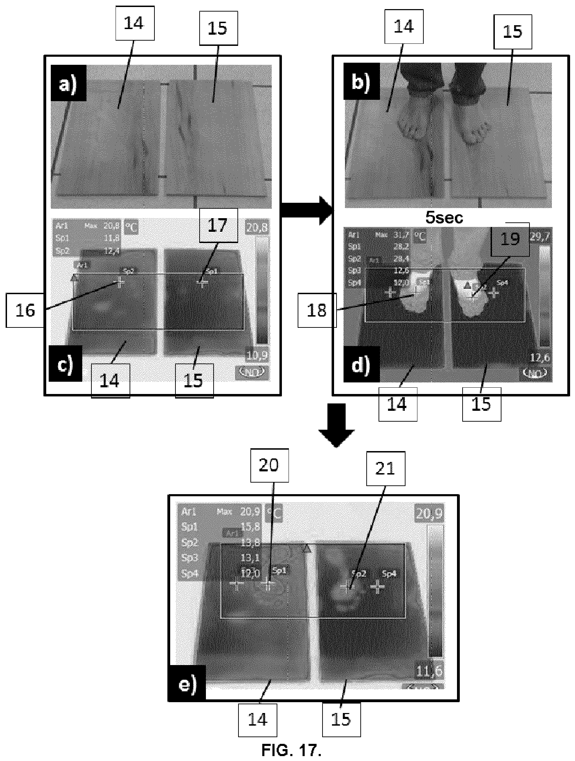

FIG. 17: Photographs taken with with the thermographic camera (real image (a and b) and infrared camera (c, d and e) which show the blind test experiment performed with the conventional floor tiles (14) and anorthite tiles (15). Points 16 and 17 show the initial temperature of each floor tile which is 12 °C in both cases. Points 18 and 19 show the temperature of each foot at the time of stepping on the floor tiles, which is 28.3 °C in both feet. Points 21 and 22 show the temperatures of the prints left by the feet on conventional floor tiles (14) and anorthite tiles (15) after stepping on them for 5 seconds and which are 15.8 °C and 13.8 °C respectively.

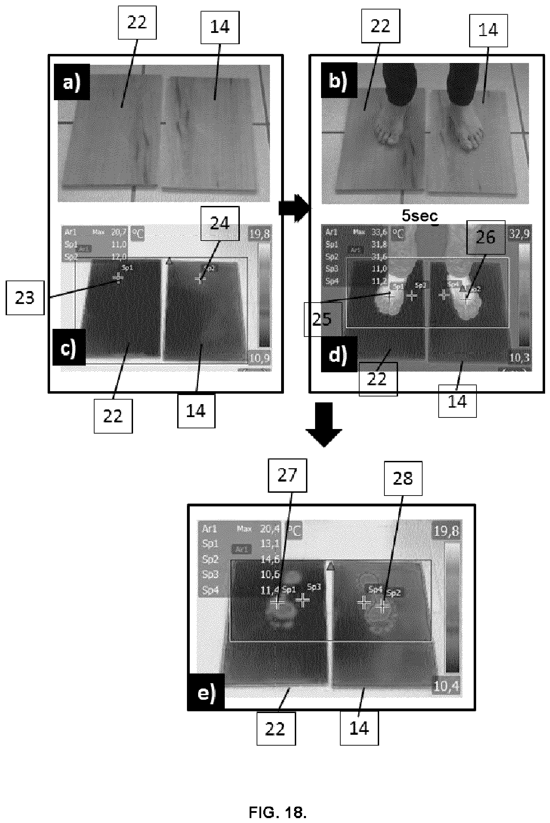

FIG. 18: Photographs taken with the thermographic camera (real image (a and b) and infrared (c, d and e) which show the blind test experiment performed with conventional floor tiles (14) and albite tiles (22). Points 23 and 24 show the initial temperature of each floor tile, which is 11 ° C, and 12 °C respectively. Points 25 and 26 show the temperature of each foot at the time of stepping on the floor tiles, which is 31.7 °C in both feet. Points 27 and 28 show the temperatures of the prints left by the feet on the conventional floor tiles (14) and anorthite tiles (15) after stepping on them for 5 seconds, and which are 14.6 °C and 13.1 °C, respectively.

## EXAMPLES

The invention will be illustrated below by tests performed by the inventors.

**Example 1. Glass-ceramic material with principal crystallizations of albite phase.**

The following formulation was used expressed in weight percent of equivalent oxides with respect to the total to obtain the glass-ceramic material with principal crystallizations of albite phase set down in table 1.

Table 1: Weight percents expressed in terms of equivalent oxides of the composition of glass-ceramic material with principal crystallizations of albite phase.

| Equivalent oxides | wt% |
|---|---|
| $SiO_2$ | 54.67 |
| $Al_2O_3$ | 22.63 |
| CaO | 7.73 |
| SrO | 7.20 |
| $Na_2O$ | 2.14 |
| $K_2O$ | 1.44 |
| $ZrO_2$ | 1.24 |
| Others* | 2.96 |
| *Others: $B_2O_3$, $TiO_2$, $P_2O_5$, $Fe_2O_3$, MgO, BaO, ZnO with the weight percent of each one of them being less than 1 %. | |

In a first stage, the homogenized raw materials were melted with the following composition described in wt% in Table 2 and in wt% expressed in term of equivalent oxides in table 3.

Table 2: Raw materials in wt% used to obtain a frit in stage a) for a glass-ceramic material with principal crystallizations of albite phase.

| Raw materials | wt% |
|---|---|
| Potassium feldspar | 6.96 |
| Quartz | 19.12 |
| Dolomite | 3.63 |
| Calcium carbonate | 10.98 |
| Kaolin | 6.86 |
| Sodium feldspar | 28.04 |
| Calcined alumina | 9.32 |
| Strontium carbonate | 10.69 |
| Zircon flour | 1.96 |
| Others** | 2.45 |
| **Others: Boric acid, ZnO, Bicalcium phosphate, with the weight percent of each one of them being less than 1 %. | |

Table 3: Weight percent expressed in terms of equivalent oxides of the frit obtained in stage a) for a glass-ceramic material with principal crystallizations of albite phase.

| Equivalent oxides | wt% |
|---|---|
| $SiO_2$ | 54.54 |
| $ZrO_2$ | 1.43 |
| SrO | 8.31 |
| $Al_2O_3$ | 19.56 |

(continued)

| Equivalent oxides | wt% |
|---|---|
| CaO | 8.90 |
| Na$_2$O | 2.47 |
| K$_2$O | 1.46 |
| Others*** | 3.32 |

***Others: B$_2$O$_3$, TiO$_2$, P$_2$O$_5$, Fe$_2$O$_3$, MgO, BaO, ZnO with the weight percent of each one of them being less than 1 %.

The melting is carried out in an industrial melting oven at temperatures between 1450 °C and 1500 °C. Once the melting has been performed, the melted glass is cooled using water via a sudden cooling process to obtain the frit.

The term "frit" is understood to be a vitreous material obtained from the melting at high temperatures, generally of over 1400 °C, and a rapid cooling generally on water, or with air.

Then, the frit in aqueous suspension is ground together with a kaolin clay in stage b). The kaolin used has the composition expressed in Table 4. The ground mixture had a ratio of 90 wt% of the frit and 10 wt% of kaolin. The aqueous suspension was formed by 63 wt% of the mixture obtained with 37 wt% of water. Two additives, carboxymethyl cellulose and tripolyphosphate, were added to the aqueous suspension in an excess with respect to the solid content of 0.2 wt% each one. The grounding took place in a rapid alumina ball mill during 20 minutes until obtaining a barbotine characterized in that it has a rejection less than 6 % in a 63 $\mu$m mesh, obtaining the end material in the form of aqueous barbotine.

Table 4: Composition expressed in terms of equivalent oxides of the kaolin clay used in stage b) to prepare a glass-ceramic material with principal crystallizations of albite phase.

| Equivalent oxides | wt% |
|---|---|
| SiO$_2$ | 48.60 |
| TiO$_2$ | 0.06 |
| Al$_2$O$_3$ | 37.02 |
| K$_2$O | 1.06 |
| Ignition weight losses | 8.0 |
| **Others****** | 4.42 |

****Others: B$_2$O$_3$, TiO$_2$, P$_2$O$_5$, Fe$_2$O$_3$, CaO, MgO, BaO, ZnO with the weight percent of each one of them being less than 1 %.

The material resulting from the grounding was dried in an oven at 60 °C during 8 hours until obtaining a powder suitable to undergo a forming process by pressing in the form of disks with dimensions of 6 cm in diameter and 12 mm thickness. The pressing pressure used in the forming stage was of 400 kg·cm$^{-2}$.

The disks obtained in the forming stage underwent firing in a single-channel roller kiln in a 90-minute cycle and maintaining the maximum temperature of 1100 °C during 6 min.

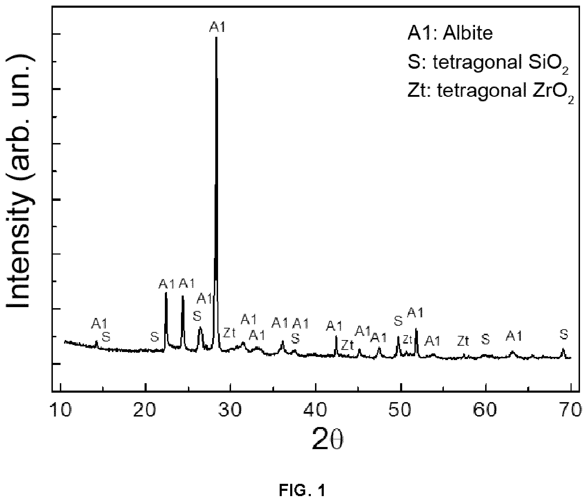

In FIG. 1, the powder X-ray diffractograms are shown of the glass-ceramic material sintered at 1100 °C described in this example where the peaks corresponding the following crystallizations were identified: A1: Albite; S: Tetragonal silica. From this spectrum, the vitreous phase percentage of the glass-ceramic material was obtained. The $\alpha$ ratio for this composition is 0.886 being very favourable to obtaining a high crystallization of albite phase and being free from crystalline phases of greater conductivity.

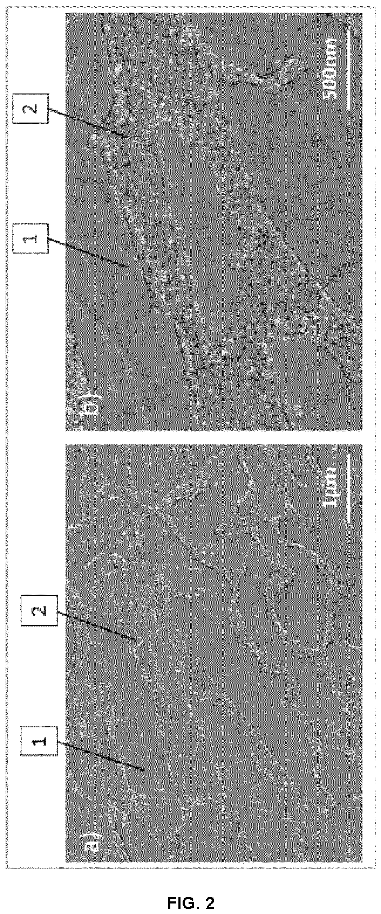

FIG. 2 shows the micrographs obtained via scanning electron micrograph of the polished surface and surface chemically attacked with HF at 5 % by volume of the material described in this example 1 sintered at 1100 °C with a heating rate of 30 °C/min and a time of remaining at the maximum temperature of 6 minutes.

In these micrographs, micrometric albite crystals (1) are observed with elongated morphologies and sizes between 300 nm and 1500 nm for the smaller diameter and between 3 and 8 $\mu$m for the larger diameter. These microcrystals are separated from one another by regions with nanocrystals (2) of diameters comprised between 40 and 80 nm and vitreous phase indicated as the cavities that remain between the nanocrystals.

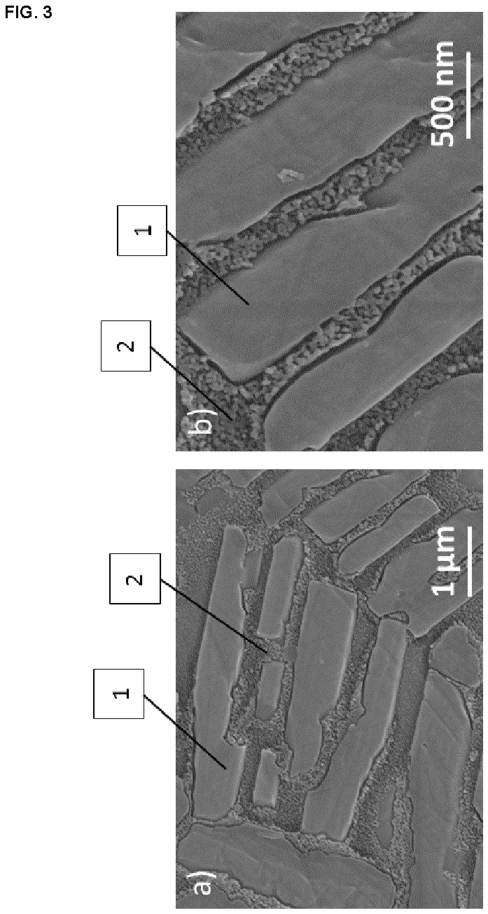

FIG. 3 shows the micrographs obtained via scanning electron micrograph of the polished surface and surface chemically attacked with HF at 5 % vol of the material described in example 1 sintered at 1220°C with a heating rate of 30 °C/min and a time of remaining at the maximum temperature of 6 minutes. The same microstructure is observed, where the albite crystals (1) have slightly reduced their size of larger diameter with respect to the glass-ceramic material sintered at 1100 °C, due to the increase in temperature, and they are also separated by a region with nanocrystals of size between 40 and 80 nm (2) and remains of vitreous phase. This microstructure maintains the values of thermal conductivity and increases the values of mechanical resistance module.

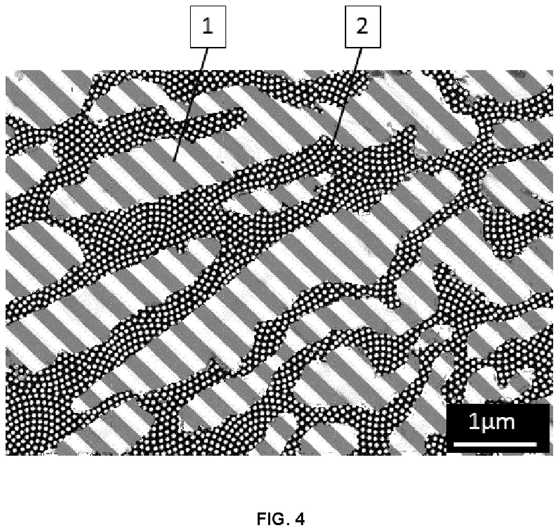

In FIG. 4, a diagram is shown of the different structures observed in the micrographs of FIG 2, distinguishing the albite microcrystals (1) and the region with nanocrystals that separates them (2).

As a result of the sintering stage, a glass-ceramic material was obtained with the following properties set down in Table 5. The glass-ceramic material has a thermal conductivity comparable to that of human skin and in the range of materials such as wood. These properties represent an advantage for the production of ceramic products with thermal warmth factor values similar to those of human skin.

Table 5: Main properties for the glass-ceramic material formed as a coating sintered at different temperatures.

| Maximum sintering temperature (°C) | 1100 | 1220 |
|---|---|---|
| Density (g cm$^{-3}$) | 2.63 | 2.64 |
| Coefficient of thermal expansion (°C$^{-1}$) | 53.32 | 53.32 |
| Modulus of rupture (MPas) | 52 | 71 |
| Whiteness coefficient (L*) | 87.7 | 91.1 |
| Thermal conductivity (Wm$^{-1}$K$^{-1}$) | 0.31 | 0.29 |
| Thermal warmth factor (TWF) | 0.45 | 0.47 |
| Vitreous phase percentage (%) | 7.2 | 6.8 |

The density of the material is calculated using Archimedes' principle.

The coefficient of thermal expansion was measured in the temperature range from 30 to 500 °C using a DIL 801 L dilatometer from Bahr.

The modulus of rupture (MOR) was obtained using the configuration of three bending points using an Instron 4411 Testing machine apparatus (Series IX, Boston, MA), equipped with 2 kN.

The whiteness coefficient (L*) was measured with a Coloreye XTH colorimeter.

The thermal conductivity was measured using a DTC-25 device from TA Instrument using the controlled heat flow method.

The Thermal Warmth Factor was calculated from the abovementioned formula taking the value obtained in the cooling curve at 50 s, and the values of the calibration materials (Vespel and Steel STM) at the same seconds.

The vitreous phase percentage is obtained from the X-ray diffraction spectrum, by subtracting the crystalline phase from the total spectrum, in the range of $2\theta = 10 - 70$ from the calculation of areas.

The glass-ceramic material obtained has a thermal conductivity value similar (even less) than the average of human skin.

The material obtained has a high whiteness value for a percentage of zircon in the final composition of just 1.46 wt% which corresponds to 2 wt% of zircon added in the frit.

The glass-ceramic material has a high modulus of rupture, above the value of porcelain stoneware material used as a ceramic floor tile (modulus of rupture greater than 25 MPas).

**Example 2: Glass-ceramic material with principal crystallizations of albite phase and crystals with different percentages of ZrSiO$_4$ in the frit.**

The formulation described in Table 6 expressed in weight percent expressed in terms of equivalent oxides with respect to the total of the glass-ceramic material was used to obtain the glass-ceramic material with principal crystallizations of albite phase and different weight percents of ZrSiO$_4$ added in the frit.

Table 6: Compositions in wt% expressed in terms of equivalent oxides with respect to the total of the glass-ceramic material with principal crystallizations of albite phase and different wt% of ZrSiO$_4$ added in the frit.

| % of ZrSiO4 added in the frit | 0 | 2 | 4 | 6 | 8 | 10 |
|---|---|---|---|---|---|---|
| % Equivalent oxides | | | | | | |

(continued)

| % of ZrSiO4 added in the frit | 0 | 2 | 4 | 6 | 8 | 10 |
|---|---|---|---|---|---|---|
| SiO2 | 54.90 | 54.62 | 54.15 | 53.78 | 53.40 | 53.05 |
| ZrO2 | 0 | 1.30 | 2.55 | 3.75 | 4.90 | 6.01 |
| Al2O3 | 20.10 | 21.59 | 21.35 | 20.98 | 20.63 | 20.29 |
| CaO | 9.10 | 8.13 | 7.94 | 7.77 | 7.62 | 7.46 |
| SrO | 8.50 | 7.57 | 7.40 | 7.25 | 7.10 | 6.95 |
| Na2O | 2.50 | 2,25 | 2.18 | 2,13 | 2.09 | 2.04 |
| K2O | 1.50 | 1.45 | 1.41 | 1.38 | 1.36 | 1.34 |
| Others* | 3.33 | 3.08 | 3.01 | 2.98 | 2.91 | 2.86 |
| Others*: $B_2O_3$, $TiO_2$, $P_2O_5$, $Fe_2O_3$, MgO, BaO, ZnO with the weight percent of each one of them being less than 1 %. | | | | | | |

Similarly to example 1, the raw materials were melted, this time in a crucible oven.

In accordance with the wt% of $ZrSiO_4$ added in the frit and for samples sintered at 1220 °C, values of whiteness coefficient, thermal conductivity and proportion of vitreous phase are obtained, set down in Table 7.

Table 7: Values of whiteness coefficient, thermal conductivity and proportion of vitreous phase in the glass-ceramic materials with phase principal of albite with different wt% of $ZrSiO_4$ added in the frit.

| % $ZrSiO_4$ added in the frit | Whiteness coefficient (L*) | Thermal conductivity ($Wm^{-1}K^{-1}$) | Vitreous phase (%) |
|---|---|---|---|
| 0 | 86.3 | 0.55 | 84.90 |
| 2 | 87.9 | 0.31 | 93.15 |
| 4 | 90.1 | 0.44 | 82.90 |
| 6 | 91.4 | 0.45 | 82.48 |
| 8 | 91.5 | 0.33 | 83.07 |
| 10 | 92.3 | 0.35 | 88.04 |

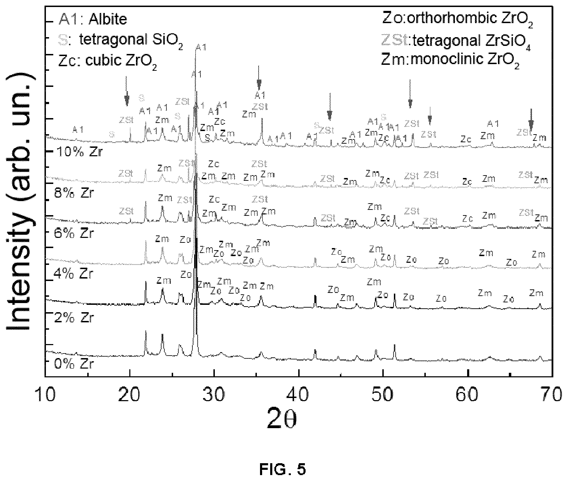

In FIG. 5, the powder X-ray diffractograms are observed of glass-ceramic materials described in this example that have been identified with the following crystalline phases. A1: Albite; Zc: Zirconia (cubic); Zo: Zirconia (orthorhombic); Zm: Zirconia (monoclinic); ZSt: Tetragonal zircon; S: Tetragonal silica. It is observed that as the proportion of Zirconium increased in the formulation of the frit, the crystalline phases of Tetragonal zircon (ZSt) increased with all certainty due to saturation of the $Zr^{4+}$ cation in the vitreous phase which causes its devitrification.

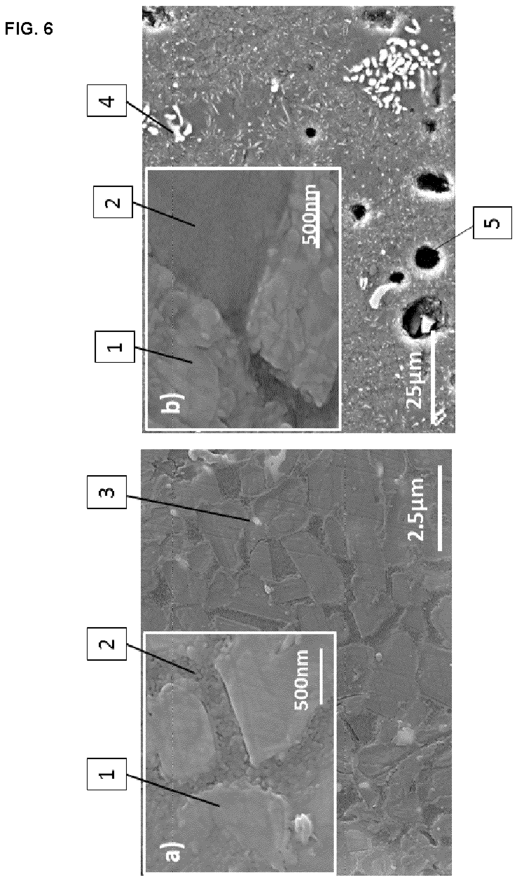

FIG. 6 shows the scanning electron microscope micrographs of the polished surface and surface chemically attacked with HF (5 % vol.) of the glass-ceramic materials described in this example with 4% (FIG. 6a)) and 10% (FIG. 6b)) Zirconium content. As can be observed, for low concentrations of zirconium the crystallizations are of smaller size (3) and they are homogeneously distributed throughout the micro-nanostructure (2), preferably in the crystal interfaces. However, for higher Zircon concentrations, crystallizations in Zircon (4) form were produced, which had sizes of 200 - 500 nm, forming agglomerations in some regions.

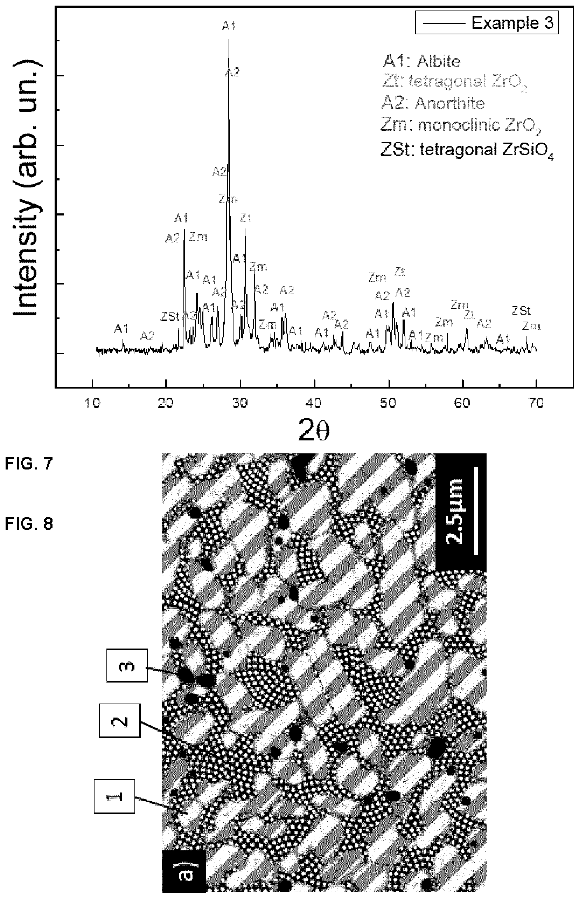

FIG. 7 shows the diagrammatic images of the crystallizations observed in the micrographs with addition of $ZrSiO_4$ in the frit of 4 wt% (FIG. 7a)) and 10 wt% (FIG. 7b)). Figure 7a) shows the albite microcrystals (1), separated from one another by a region of nanoparticles (2) and the $ZrO_2$ (3) and Zircon (4) crystals. Figure 7b) shows an area (6) which corresponds to a microstructure diagrammatically shown in Figure 7a) considered as an assembly to be able to define the zircon (4) and of zirconia (3) crystals and the pores formed (5).

Therefore, the addition of a percentage of $ZrSiO_4$ in the frit of 2 wt% is advantageous as it favours the crystallization processes of the albite-type feldspar crystalline phases, which leads to a reduction in thermal activity. As more zircon is added to the composition, the amount of zircon crystals increase, which in high quantities also decreases the thermal conductivity of the glass-ceramic materials.

**Example 3: Glass-ceramic material with principal crystallizations of anorthite phase.**

The following formulation was used to obtain the glass-ceramic material with principal crystallizations of anorthite phase, described in Table 8 expressed in weight percent of equivalent oxides with respect to the total of the glass-ceramic material:

Table 8: Weight percent expressed in terms of equivalent oxides of the composition of glass-ceramic material with principal crystallizations of anorthite phase.

| Equivalent oxides | wt% |
|---|---|
| $SiO_2$ | 47.99 |
| $ZrO_2$ | 7.31 |
| SrO | 0 |
| $Al_2O_3$ | 21.42 |
| CaO | 11.82 |
| $Na_2O$ | 4.58 |
| $K_2O$ | 1.65 |
| ZnO | 4.30 |
| Others* | 0.94 |
| *Others: $TiO_2$, $P_2O_5$, $Fe_2O_3$, MgO, PbO with the weight percent of each one of them being less than 1 %. | |

The process described in example 1 was followed to develop the glass-ceramic materials sintered at 1220 °C with the properties set down in Table 9:

Table 9: Main parameters determined for the glass-ceramic material with principal crystallizations of anorthite phase.

| Density (g.cm$^{-3}$) | 2.63 |
|---|---|
| Coefficient of thermal expansion (°C$^{-1}$) | 65.3 |
| Modulus of rupture (MPas) | 84 |
| Whiteness coefficient (L*) | 91.7 |
| Thermal conductivity (Wm$^{-1}$K$^{-1}$) | 0.35 |
| Thermal warmth factor (TWF) | -4.8 |
| Vitreous phase percentage (%) | 9.1 |

In FIG. 8, the powder X-ray diffractogram of the sample described in this example is observed, identifying the peaks corresponding to the following crystallizations: A1: Albite; A2: Anorthite; Zt: Tetragonal zirconia; Zm: Monocyclic Zirconia; ZSt: Tetragonal zircon. From this diffractogram, the crystallization percentage of the sample was extracted, which as is observed in Table 9 is very high. The $\alpha$ ratio for this composition of 0.946 being very favourable to obtain a high crystallization of anorthite phase and be free from crystalline phases of greater conductivity.

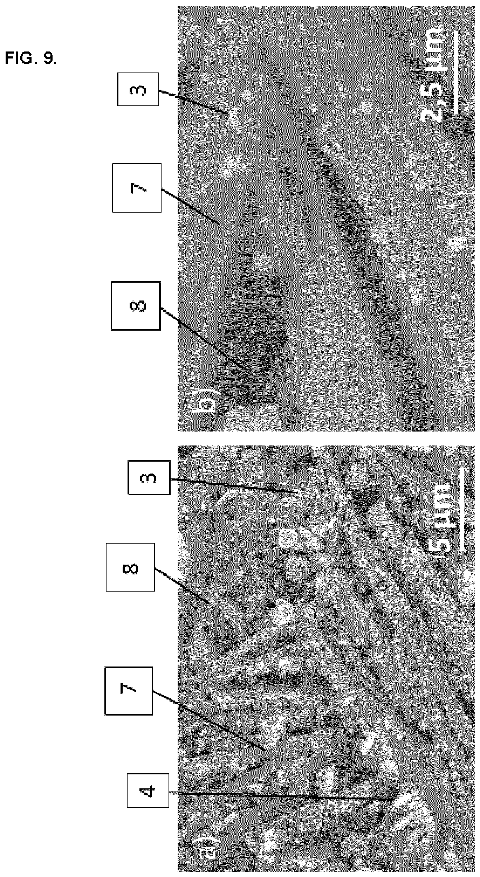

FIG. 9 shows the scanning electron microscope micrographs of the polished surface and surface chemically attacked with HF. In these micrographs, the anorthite crystals (7) are observed, in addition to a region with nanocrystals (8) which separates the larger crystals. The anorthite microcrystals that form the glass-ceramic material of the invention have elongated morphologies with smaller diameter of between 200 nm and 500 nm and larger diameter of between 5 $\mu$m and 30 $\mu$m. Likewise, crystallizations of zirconia (3) less than 100 nm and of zircon (4) of size between 200 and 500 nm are also observed, especially placed on the crystal edges. The vitreous phase has been eliminated with the chemical attack, and as observed is minority, although greater than the vitreous phase corresponding to example 1, being only found in the interfaces between crystallizations.

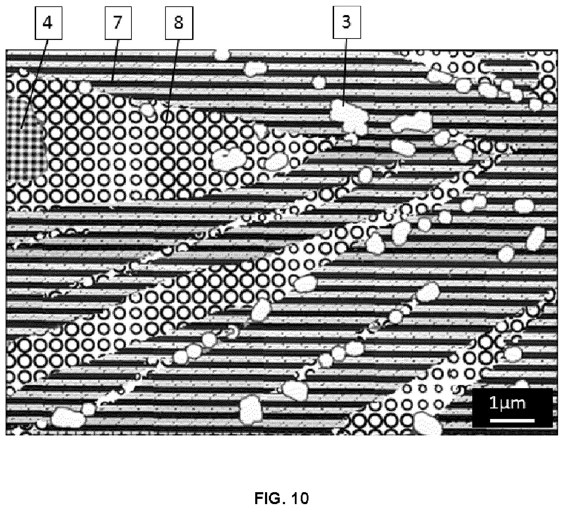

In FIG. 10, a diagram is shown of the crystallizations present in the micrographs of the material differentiating the anorthite microcrystals (7), the region with nanocrystals (8) and the crystallizations of zircon (4) or zirconia (3).

The glass-ceramic material obtained has a very high whiteness. It also has very high modulus of rupture values.

**Example 4: Glass-ceramic materials obtained by mixing of frits.**

To obtain glass-ceramic materials with a mixture of anorthite and albite phases, the frits of examples 1 and 3 were mixed. Table 10 represents the weight percents of the frits of examples 1 and 3 used to prepare mixtures 1 to 3. Table 11 sets down the properties of the materials sintered at 1100 °C.

Table 10: Compositions in wt% for the glass-ceramic material with mixtures of anorthite and albite phases

| Material mixture | Mixture 1 | Mixture 2 | Mixture 3 |
|---|---|---|---|
| wt% frit example 1 | 90 | 50 | 10 |
| wt% frit example 3 | 10 | 50 | 90 |

Table 11: Main properties determined for the glass-ceramic material with mixtures of anorthite and albite phases.

| | Mixture 1 | Mixture 2 | Mixture 3 |
|---|---|---|---|
| Coefficient of thermal expansion ($°C^{-1}$) | 53.95 | 57.71 | 61.96 |
| Whiteness coefficient ($L^*$) | 87.0 | 88.6 | 91.2 |
| Thermal conductivity ($Wm^{-1}K^{-1}$) | 0.31 | 0.30 | 0.46 |
| Vitreous phase percentage (%) | 9.0 | 4.7 | 12.1 |
| Modulus of rupture (MPas) | 52 | 110 | 84 |

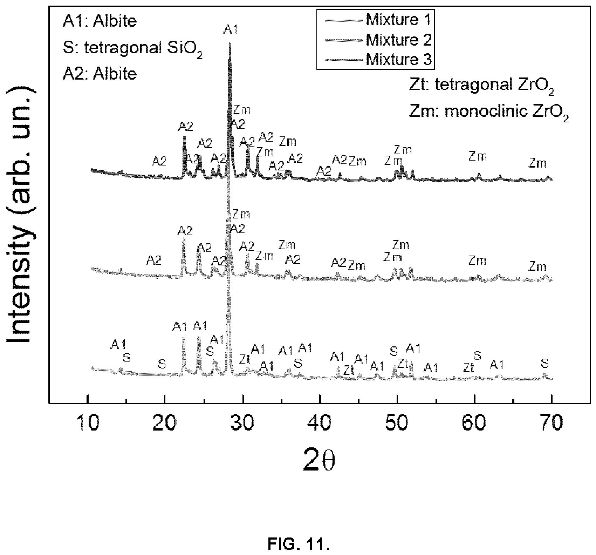

In FIG. 11, the X-ray diffractogram of the materials is observed identifying the following crystalline phases: A1: Albite; A2: Anorthite; S: Tetragonal silica; Zt: Tetragonal zirconia; Zm: Monoclinic zirconia. It was observed that, in the material of mixture 1, the majority spectrum is of albite crystals with a small contribution of the anorthite phase. It also observed the presence of tetragonal silica and tetragonal zirconia. As the concentration of the frit of example 3 increased, a greater contribution of the anorthite phase appeared, with the disappearance of the tetragonal zirconia and the monoclinic phase appearing. This is more pronounced in mixture 3. As regards the vitreous phase, it was observed that it increased when the crystallization of anorthite increases, in accordance with the conductivity values which also increase for the case of mixture 3.

In FIG. 12, the micrographs obtained by scanning electron microscope are observed showing the different mixtures: mixture 3 (FIG. 12 a)), mixture 2 (FIG. 12 b)) and mixture 1(FIG. 12c)). Likewise, diagrammatic figures are observed of the different types of structures shown in the micrographs in Figures 12 d), 12 e) and 12 f), respectively. In FIG. 12 a) a crystalline phase of albite (1) was observed surrounded by a region of nanoparticles (2) in majority form, which is defined as area 6, and in some isolated areas, regions appear with crystals of anorthite crystalline phase (7) with their region with nanoparticles (8) which is defined as area 9, and it is attributed to the fact that no reaction occurs in the mixtures between the different frit particles during the sintering.

The distribution of the microstructures of mixture 3 can be clearly seen in the diagram of FIG 12 d). The ratio between the anorthite and albite phases was of 10 and 90 % respectively in area. Likewise, zircon (4) and zirconia (3) crystals, quartz crystals (10) and pores of sizes between 1 - 20 $\mu$m (5) were observed.

FIG. 12 e) shows the diagram of the distribution of microstructures corresponding to a ratio between the anorthite and albite phases of 45 and 55 % respectively in area.

FIG. 12 f) shows the diagram of the distribution of microstructures corresponding to a ratio between the anorthite and albite phases of 80 and 20 % respectively in area.

The preparation of mixtures allows the control of the desired final properties, mixtures can be prepared with intermediate properties in some parameters such as the coefficients of thermal expansion and whiteness, whilst in other mixtures improvements occur in the values of thermal conductivity and percentages of crystallization. From a production standpoint, obtaining glass-ceramic materials with thermal warmth via the preparation of mixtures makes it possible to compensate for deviations in the composition during their production and adjusting parameters in accordance with its application.

**Example 5: Comparative example of conventional glass-ceramic material with mullite phase.**

As a comparative example, the properties were analysed of a comparative glass-ceramic material with mullite phase whose composition is set down in Table 12.

Table 12: Weight percent expressed in terms of equivalent oxides of the composition of conventional glass-ceramic material with mullite.

| Equivalent oxides | wt% |
|---|---|
| $SiO_2$ | 43.70 |
| $B_2O$ | 3.50 |
| $P_2O_5$ | 2.88 |
| $Al_2O_3$ | 32.20 |
| CaO | 2.98 |
| MgO | 2.63 |
| BaO | 3.12 |
| SrO | 3.28 |
| ZnO | 2.14 |
| $Na_2O$ | 1.50 |
| $K_2O$ | 1.59 |
| Others* | 0.21 |
| *Others: $ZrO_2$, $TiO_2$, $Fe_2O_3$ with the weight percent of each one of them being less than 1%. | |

The raw materials used to obtain the frit of this material with mullite phase, expressed in weight percents, are those set down in table 13. The properties of the sintered material are included in table 14.

Table 13: Weight percent of raw materials used for the composition of the frit used is of production of conventional glass-ceramic material with mullite phase.

| Raw materials | wt% |
|---|---|
| Borax pentahydrate | 6.0 |
| Boric acid | 1.3 |
| Quartz | 39.3 |
| Potassium nitrate | 2.8 |
| Zinc oxide | 1.8 |
| Dicalcium phosphate | 5.3 |
| Alumina | 30.0 |
| Barium carbonate | 3.5 |
| Strontium carbonate | 4.6 |
| Magnesite | 5.4 |

Table 14: Main properties determined for the conventional glass-ceramic material with mullite phase.

| Density (g/cm$^3$) | 2,70 |
|---|---|
| Thermal conductivity (Wm$^{-1}$K$^{-1}$) | 0.77 |
| Coefficient of thermal expansion (°C$^{-1}$) | 41.58 |

(continued)

| Thermal warmth factor (TWF) | 4,9 |
|---|---|
| Vitreous phase percentage (%) | 35,0 |

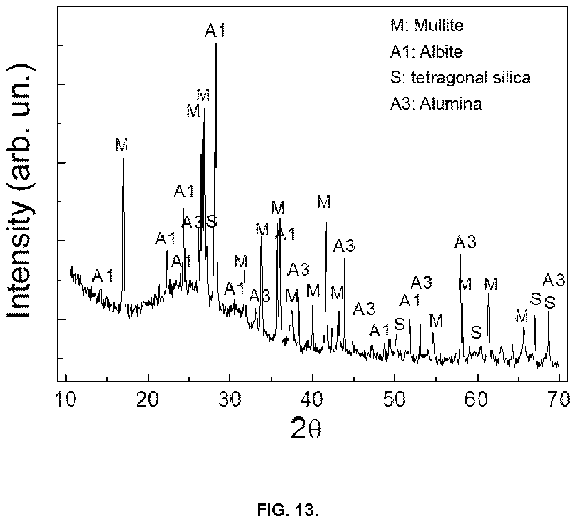

In FIG. 13, the powder X-ray diffractogram of the sample described in example 5 is observed, identifying the peaks corresponding to the following crystallizations: M: Mullite; A1: Albite; S: Tetragonal silica; A3: Alumina. From this diffractogram, the percentage of crystallization of the material with mullite phase was determined. This percentage is clearly less than that observed in examples 1, 2, 3 and 4. The $\alpha$ ratio is for this composition 1.870 being highly favourable to obtaining a crystallization of mullite phase. The thermal conductivity of the mullite phase is 6 $Wm^{-1}K^{-1}$ and, therefore, not desirable.

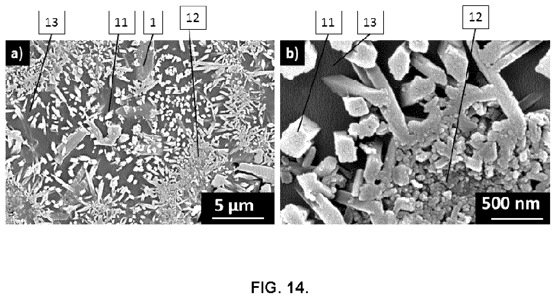

FIG. 14 shows the micrographs obtained by scanning electron microscope of the material with mullite phase distinguishing different crystallizations of microcrystals: mullite (11) and albite (1) and an important proportion of interconnected vitreous phase (13) which is surrounding the crystallizations and isolated regions of nanocrystals (12). The presence of a region with nanocrystals as boundary between the microcrystals was not observed.

Therefore, the material with mullite phase shown in this example does not display thermal warmth and its properties moves away from the product of the invention.

**Example 6: Glass-ceramic material formed as coating in the form of glaze of porcelain stoneware.**

The glass-ceramic material obtained in example 1 is processed in the form of ceramic glaze on porcelain stoneware by bell-shaped glaze application in an glazing line on a compacted porcelain stoneware support with a layer of slip previously deposited using the same bell-shaped glaze application method. Then, a palette of digital printing inks was applied on the green glaze surface with colour configuration CMBYPK with the aid of a Kerajet machine. Next, it underwent standard firing in an industrial oven at 1200 °C with a cold-to-cold cycle of 60 minutes.

Coatings were prepared in the form of glazes with different thicknesses, varying the passage rate of the slipped support by the flow of the bell-shaped glaze application. In the tile industry, glazes are usually identified by grammage expressed as grams of glaze per $m^2$ of support. In the following Table 15, the thermal conductivity, TWF and roughness of the glazes on porcelain stoneware with grammages of 750 $gm^{-2}$ and 2500 $g.m^{-2}$ are shown.

Table 15: Values of thermal conductivity, Thermal warmth factor and roughness for the glass-ceramic material formed as coating in the form of glaze of porcelain stoneware with different grammages.

| Grammage ($g.m^{-2}$) | 750 | 2500 |
|---|---|---|
| Thermal conductivity ($Wm^{-1}K^{-1}$) | 0.46 | 0.44 |
| Thermal warmth factor (TWF) | 0.62 | 0.34 |
| Roughness ($\mu m$) | 8.9 | 8.4 |

As is observed, on applying the glass-ceramic material on the porcelain stoneware in the form of glaze coating, the thermal conductivity increases from a value obtained in example 1 of 0.31 $Wm^{-1}K^{-1}$ to values of 0.44 - 0.46 $Wm^{-1}K^{-1}$. The thermal conductivity of the porcelain stoneware support without the glaze was determined as 0.7 $Wm^{-1}K^{-1}$, so that on adding a coating in the form of glaze formed by the glass-ceramic material of example 1 a significant reduction is obtained of the thermal conductivity of the ceramic floor tile, which is advantageous for its uses as cladding tiles with thermal warmth.

Likewise, the glass-ceramic material applied on porcelain stoneware was subjected to different sintering temperatures. In table 16, the thermal conductivity and thermal warmth factor TWF data are observed of the glazes on porcelain stoneware sintered at different temperatures in a laboratory muffle furnace.

Table 16: Values of thermal conductivity and of Thermal warmth factor for the glass-ceramic material formed as coating in the form of glaze of porcelain stoneware at different sintering temperatures.

| Sintering temperature (°C) | Thermal conductivity ($Wm^{-1}K^{-1}$) | Thermal warmth factor (TWF) |
|---|---|---|
| 1200 | 0.46 | -0.9 |
| 1210 | 0.48 | 0.95 |

(continued)

| Sintering temperature (°C) | Thermal conductivity ($Wm^{-1}K^{-1}$) | Thermal warmth factor (TWF) |
|---|---|---|
| 1220 | 0.46 | 0.45 |
| 1240 | 0.40 | 0.51 |
| 1250 | 0.38 | 0.66 |

## EXAMPLE 7: COMPARATIVE EXAMPLE OF A CONVENTIONAL MATT GLAZE APPLIED ON PORCELAIN STONEWARE.

A conventional matt ceramic glaze has crystallizations of anorthite in a much greater proportion than in the glass-ceramic glaze of the present invention since it has a vitreous phase higher than 20%. A conventional matt glaze is obtained from a frit which partially crystallizes in anorthite and which has been mixed in a stage with different minerals such as kaolin, clay, nepheline, dolomite, zircon, quartz and $\alpha$-alumina.

The properties of this conventional glaze as comparative example sintered in a rapid single channel roller industrial kiln at 1200 °C with 60-minute cold-to-cold cycle are set down in table 17.

Table 17: Values of thermal conductivity and vitreous phase percentage of a conventional matt glaze applied on porcelain stoneware.

| Thermal conductivity ($Wm^{-1}K^{-1}$) | 0.77 |
|---|---|
| Vitreous phase percentage (%) | 26.3 |

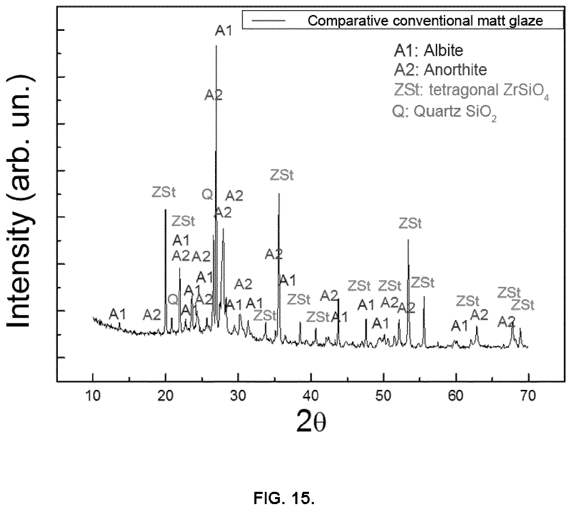

In FIG. 15, the X-ray diffractogram of the conventional matt ceramic glaze is shown, distinguishing the following crystallizations: A1: Albite; A2: Anorthite; Q: Quartz; ZSt: Tetragonal zircon. Unlike the glass-ceramic material of the invention, the conventional matt ceramic glaze also has a quartz crystalline phase. The vitreous phase percentage of 26.3% was taken from the diffractogram, observing that the vitreous phase increases with respect to the glass-ceramic material obtained in examples of glass-ceramic material of the present invention, example 1, 2, 3, and 4.

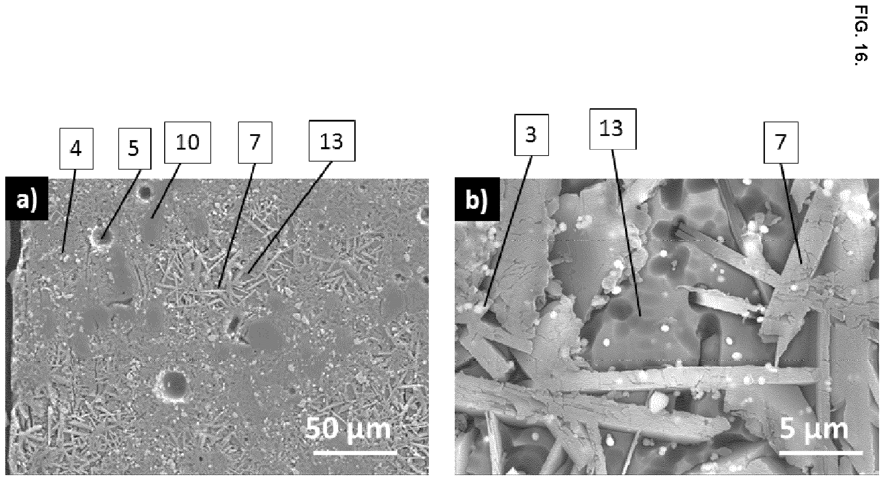

FIG. 16 shows the micrographs obtained by scanning electron microscope of the polished surface and surface chemically attacked with HF of the conventional matt glaze, observing that its microstructure is characterized by a percolation of the vitreous phase (13) which forms a continuum. The crystallizations of anorthite (7) separated by the vitreous phase (13), and quartz crystals (10), zircon crystals (4) and pores (5) are also observed. No regions with nanoparticles are observed. The vitreous phase is considerably greater than 18 % and it is also percolated, in this way being responsible for the increase in thermal conductivity, for which reason it is not a material suitable for the application of thermal warmth.

## EXAMPLE 8: BLIND EXPERIMENT.

A blind experiment was performed evaluating the sensation of heat experienced by 10 middle-aged people chosen at random (5 women and 5 men). 3 pieces of floor tiles were placed with the same final product finish in a room at ambient temperature (values between 21.5 and 23 °C). The room's floor was wooden. The pieces of floor tile were cooled to 10 °C and they were placed on the wooden floor. The temperature was determined by thermographic means.

The three pieces of the floor tiles are described below:

1. Conventional (14): This floor tile was prepared with the comparative conventional matt glaze described in example 7. The support used was a 1cm-thick porcelain tile.
2. Floor tile with principal crystalline phase of anorthite (15): This floor tile was prepared as coating in the form of glaze using the glass-ceramic material of example 3. The support used was a 1cm-thick porcelain tile.
3. Floor tile with principal crystalline phase of albite (22): This floor tile was prepared as coating in the form of glaze using the material described in example 1. The support used was a 1cm-thick porcelain tile.

The experiment consisted of making each individual separately take off their shoes and step on the wooden floor during 15 seconds, then they had to step on floor tile 14 (conventional) which was at 10 °C during 5 seconds and again step on the wood for another 15 seconds. This process was repeated with each one of the floor tiles (15 and 22) using the same foot. Finally, the individual had to establish which of the 3 floor tiles gave him or her the greatest sensation of warmth in contact with the foot.

In 100 % of the cases, the individuals replied that the floor tile which gave them the greatest sensation of cold was 14 (conventional). 80 % of the individuals determined that the floor tile which gave them greatest sensation of thermal warmth was floor tile 22 (albite), and the remaining 20 % determined that it was 15 (anorthite).

Photographs were also taken with an infrared camera or thermographic camera, which takes real images and their equivalent with thermographics or infrared, during the process, simultaneously stepping on both floor tiles, with one foot on floor tile 14 and the other on floor tile 15 in first place, and then the same was done with floor tiles 14 and 22 changed in order to avoid conditioning. In this way, the differences in sensation of thermal warmth between floor tiles was compared with thermal data.

In FIG. 17 and FIG. 18, the real images a) and b) and the photographs taken with the thermographic camera c), d) and e) of the blind experiments performed on one of the individuals was observed in representative form.

FIG. 17 shows the differences between floor tile 14 and floor tile 15, which are initially at 11.8 and 12.4 °C (16 and 17) respectively. Both feet are at the same temperature, 28.2 and 28.4 °C (18 and 19). After 5 seconds of stepping on the two floor tiles with the two feet, the real and infrared photographs were taken observing that the conventional floor tile (14) has a footprint with a larger temperature gradient (20), 15.8 °C, than in the case of floor tile 15 (anorthite), 13.8 °C (21). This means that floor tile 14 has absorbed more heat from the foot, because its thermal conductivity is greater, and therefore there is more heat transmission, which translates into a greater sensation of cold in the foot.

However, in floor tile 15, the temperature gradient has been less (2 °C less) (21), so that the heat transmission from the foot to the floor tile has been less in those 5 seconds, the reason for which the sensation of warmth is greater in this floor tile.

When floor tile 14 and floor tile 22 (FIG. 18) are compared, the same occurs. In this case, floor tile 22 is at an initial temperature of 11 °C (23), and floor tile 14 of 12 °C (24). The feet are at a temperature of 31.6 and 31.8 °C (25 and 26) and the temperature gradient on stepping on the conventional floor tile 1 is 14.6 °C (27), 1.5 °C greater than on stepping on floor tile 22, 13.1°C (28), so that it also gives a sensation of greater warmth on stepping on floor tile 22 than floor tile 14.

As a result, and using the blind experiment, it statistically demonstrates that the materials designed with low thermal conductivity provide a greater subjective sensation of thermal warmth for the materials of the present invention.

## Claims

1. Glass-ceramic material which exhibits a sensation of thermal warmth, **characterized in that** it has a thermal conductivity between 0.25 to 0.5 $Wm^{-1}K^{-1}$ and comprising

   • albite $NaAlSi_3O_8$ microcrystals and nanocrystals ,
   • anorthite $CaAl_2Si_2O_8$ microcrystals and nanocrystals;
   • and vitreous phase,

   where the microcrystals are separated by a region formed by the nanocrystals and the vitreous phase, where said the vitreous phase is in a proportion less than 18 % with respect to the total weight of the glass-ceramic material, where the albite microcrystals have elongated morphologies with smaller diameter of between 0.3 $\mu$m and 1.5 $\mu$m and larger diameter of between 1.5 $\mu$m and 8 $\mu$m,
   where the anorthite microcrystals have elongated morphologies with smaller diameter of between 0.2 $\mu$m and 0.5 $\mu$m and larger diameter of between 5 $\mu$m and 30 $\mu$m,
   and where said material contains at least a weight percent with respect to the end material expressed in terms of the following equivalent oxides:

   • between 45 % and 68 % of $SiO_2$,
   • between 15 % and 27 % of $Al_2O_3$,
   • between 4.5 % and 13 % of CaO,
   • between 0 % and 9 % of SrO,
   • between 1 % and 5.5 % of $Na_2O$,
   • between 1 % and 5 % of $K_2O$,
   • between 0 % and 2% of $B_2O_3$,
   • between 0 % and 14 % of $ZrO_2$,
   • and between 0% and 5 % of MgO, BaO and ZnO.

2. Glass-ceramic material according to the preceding claim, where the weight percent with respect to the end material expressed in terms of equivalent oxide of $SiO_2$ is between 49 % and 60 %.

3. Glass-ceramic material according to any one of claims 1 or 2, where the weight percent with respect to the end material expressed in terms of equivalent oxide of $Al_2O_3$ is between 17 % and 25 %.

4. Glass-ceramic material according to the preceding claim, where the weight percent with respect to the end material expressed in terms of equivalent oxide of $Al_2O_3$ is between 19 % and 23 %.

5. Glass-ceramic material according to claim 1, where the weight percent with respect to the end material expressed in terms of equivalent oxide of CaO is between 6 % and 12 %.

6. Glass-ceramic material according to the preceding claim, where the weight percent with respect to the end material expressed in terms of equivalent oxide of CaO is between 7.5 % and 11 %.

7. Glass-ceramic material according to claim 1, where the weight percent with respect to the end material expressed in terms of equivalent oxide of $Na_2O$ is between 1.5 % and 4 %.

8. Glass-ceramic material according to the preceding claim, where the weight percent with respect to the end material expressed in terms of equivalent oxide of $Na_2O$ is between 2 % and 3.5 %.

9. Glass-ceramic material according to claim 1, where the weight percent with respect to the end material expressed in terms of equivalent oxide of $K_2O$ is between 1.5 % and 4 %.

10. Glass-ceramic material according to the preceding claim, where the weight percent with respect to the end material expressed in terms of equivalent oxide of $K_2O$ is between 2 % and 3 %.

11. Glass-ceramic material according to any of claims 1 to 10, where

   • it further comprises zirconia crystals $ZrO_2$ or zirconium silicate crystals $ZrSiO_4$, where said crystals are distributed throughout the region of nanocrystals and vitreous phase which separate the microcrystals of the glass-ceramic material,

   and wherein the material displays a thermal conductivity between 0.31 a 0.45 $Wm^{-1}K^{-1}$.

12. Glass-ceramic material according to the preceding claim, where the zirconia crystals $ZrO_2$ may be in the form cubic, tetragonal or monoclinic.

13. Glass-ceramic material according to any of claims 11 or 12, where the zirconia crystals $ZrO_2$ have an average size of between 50 and 200 nm.

14. Glass-ceramic material according to claim 13, where the zirconium silicate crystals $ZrSiO_4$ have an average size of between 200 nm and 500 nm.

15. Glass-ceramic material according to any of claims 13 to 16, where the weight percent of the zirconia crystals $ZrO_2$ or of the zirconium silicate crystals $ZrSiO_4$ expressed in terms in equivalent oxide with respect to the total weight of the glass-ceramic material is between 2 % and 14 %.

16. Glass-ceramic material according to the preceding claim, where the weight percent of the zirconia crystals $ZrO_2$ or of the zirconium silicate crystals $ZrSiO_4$ expressed in terms in equivalent oxide with respect to the total weight of the glass-ceramic material is between 2 % and 8 %.

17. Production process of the glass-ceramic material according to any of claims 1 to 16, comprising the following stages:

   a) melting

   • at least one compound selected from the list comprising sassolite $H_3BO_3$, quartz $SiO_2$, dolomite $CaMg(CO_3)_2$, calcium carbonate $CaCO_3$, zincite ZnO, kaolin $Al_2Si_2O_5(OH)_4$, strontianite $SrCO_3$, alumina $Al_2O_3$, calcium phosphate $Ca_3(PO_4)_2$ a zirconium compound selected from among zirconia $ZrO_2$ or zirconium

silicate $ZrSiO_4$, an alkali feldspar selected from among albite $NaAlSi_3O_8$ and anorthite $CaAl_2Si_2O_8$, or any combination thereof,

at a temperature of between 1400 °C and 1550 °C, and fritting;
b) grinding the frit obtained in stage a) with 4 % and 15 wt % of kaolin;
c) forming the product obtained in b);
d) sintering the product formed in c) lasting less than 120 minutes at temperatures of between 980 °C and 1280 °C.

**18.** Process according to the preceding claim, where the percentage of the frit used in the grinding mixture of stage b) is between 70 % and 96 wt%.

**19.** Process according to any of claims 17 or 18, where stage d) of sintering is carried out at temperatures of between 1100 °C and 1220 °C.

**20.** Process according to any of claims 17 to 19, comprising an additional stage e), after the stage of sintering (d), of rectifying and polishing with abrasives.

**21.** Use of the glass-ceramic material according to any of claims 1 to 16, for the manufacturing of industrial, structural or ornamental ceramic products.

**22.** Use according to the preceding claim, for the manufacturing of floor tiles or glazes of floor tiles.

**23.** Use of the glass-ceramic material according to any of claims 1 to 16, as thermal insulator.

**Patentansprüche**

**1.** Glaskeramikmaterial, welches ein Gefühl von thermischer Wärme aufweist, **dadurch gekennzeichnet, dass** es eine Wärmeleitfähigkeit von zwischen 0,25 und 0,5 $Wm^{-1}K^{-1}$ aufweist und Folgendes umfasst

• Natronfeldspat $NaAlSi_3O_8$-Mikrokristalle und -Nanokristalle,
• Kalkfeldspat $CaAl_2Si_2O_8$-Mikrokristalle und -Nanokristalle,
• und Glasphase,

wobei die Mikrokristalle durch einen Bereich, welcher von den Nanokristallen und der Glasphase gebildet ist, getrennt sind, wobei die Glasphase in einem Anteil von weniger als 18 % in Bezug auf das Gesamtgewicht des Glaskeramikmaterials vorliegt,
wobei die Natronfeldspat-Mikrokristalle längliche Morphologien mit kleineren Durchmessern von zwischen 0,3 $\mu$m und 1,5 $\mu$m und größeren Durchmessern von zwischen 1,5 $\mu$m und 8 $\mu$m aufweisen,
wobei die Kalkfeldspat-Mikrokristalle längliche Morphologien mit kleineren Durchmessern von zwischen 0,2 $\mu$m und 0,5 $\mu$m und größeren Durchmessern von zwischen 5 $\mu$m und 30 $\mu$m aufweisen,
und wobei das Material mindestens ein Gewichtsprozent in Bezug auf das Endmaterial enthält, welches in Form von den folgenden äquivalenten Oxiden ausgedrückt ist:

• zwischen 45 % und 68 % $SiO_2$,
• zwischen 15 % und 27 % $Al_2O_3$,
• zwischen 4,5 % und 13 % $CaO$,
• zwischen 0 % und 9 % $SrO$,
• zwischen 1 % und 5,5 % $Na_2O$,
• zwischen 1 % und 5 % $K_2O$,
• zwischen 0 % und 2 % $B_2O_3$,
• zwischen 0 % und 14 % $ZrO_2$,
• und zwischen 0 % und 5 % $MgO$, $BaO$ und $ZnO$.

**2.** Glaskeramikmaterial nach dem vorhergehenden Anspruch, wobei das Gewichtsprozent in Bezug auf das Endmaterial, welches in Form von dem äquivalenten Oxid $SiO_2$ ausgedrückt ist, zwischen 49 % und 60 % liegt.

**3.** Glaskeramikmaterial nach einem der Ansprüche 1 oder 2, wobei das Gewichtsprozent in Bezug auf das Endmaterial, welches in Form von dem äquivalenten Oxid $Al_2O_3$ ausgedrückt ist, zwischen 17 % und 25 % liegt.

4. Glaskeramikmaterial nach dem vorhergehenden Anspruch, wobei das Gewichtsprozent in Bezug auf das Endmaterial, welches in Form von dem äquivalenten Oxid $Al_2O_3$ ausgedrückt ist, zwischen 19 % und 23 % liegt.

5. Glaskeramikmaterial nach Anspruch 1, wobei das Gewichtsprozent in Bezug auf das Endmaterial, welches in Form von dem äquivalenten Oxid CaO ausgedrückt ist, zwischen 6 % und 12 % liegt.

6. Glaskeramikmaterial nach dem vorhergehenden Anspruch, wobei das Gewichtsprozent in Bezug auf das Endmaterial, welches in Form von dem äquivalenten Oxid CaO ausgedrückt ist, zwischen 7,5 % und 11 % liegt.

7. Glaskeramikmaterial nach Anspruch 1, wobei das Gewichtsprozent in Bezug auf das Endmaterial, welches in Form von dem äquivalenten Oxid $Na_2O$ ausgedrückt ist, zwischen 1,5 % und 4 % liegt.

8. Glaskeramikmaterial nach dem vorhergehenden Anspruch, wobei das Gewichtsprozent in Bezug auf das Endmaterial, welches in Form von dem äquivalenten Oxid $Na_2O$ ausgedrückt ist, zwischen 2 % und 3,5 % liegt.

9. Glaskeramikmaterial nach Anspruch 1, wobei das Gewichtsprozent in Bezug auf das Endmaterial, welches in Form von dem äquivalenten Oxid $K_2O$ ausgedrückt ist, zwischen 1,5 % und 4 % liegt.

10. Glaskeramikmaterial nach dem vorhergehenden Anspruch, wobei das Gewichtsprozent in Bezug auf das Endmaterial, welches in Form von dem äquivalenten Oxid $K_2O$ ausgedrückt ist, zwischen 2 % und 3 % liegt.

11. Glaskeramikmaterial nach einem der Ansprüche 1 bis 10, wobei

   • es ferner Zirconiumdioxid-Kristalle $ZrO_2$ oder Zirconiumsilicat-Kristalle $ZrSiO_4$ umfasst, wobei die Kristalle über den gesamten Bereich der Nanokristalle und der Glasphase, welche die Mikrokristalle des Glaskeramikmaterials trennen, verteilt sind,

   und wobei das Material eine Wärmeleitfähigkeit von zwischen 0,31 und 0,45 $Wm^{-1}K^{-1}$ zeigt.

12. Glaskeramikmaterial nach dem vorhergehenden Anspruch, wobei die Zirconiumdioxid-Kristalle $ZrO_2$ würfelförmig, tetragonal oder monoklin sein können.

13. Glaskeramikmaterial nach einem der Ansprüche 11 oder 12, wobei die Zirconiumdioxid-Kristalle $ZrO_2$ eine Durchschnittsgröße von zwischen 50 und 200 nm aufweisen.

14. Glaskeramikmaterial nach Anspruch 13, wobei die Zirconiumsilicat-Kristalle $ZrSiO_4$ eine Durchschnittsgröße von zwischen 200 nm und 500 nm aufweisen.

15. Glaskeramikmaterial nach einem der Ansprüche 13 bis 16, wobei das Gewichtsprozent der Zirconiumdioxid-Kristalle $ZrO_2$ oder der Zirconiumsilicat-Kristalle $ZrSiO_4$, welche in Form von äquivalentem Oxid ausgedrückt sind, in Bezug auf das Gesamtgewicht des Glaskeramikmaterials zwischen 2 % und 14 % liegt.

16. Glaskeramikmaterial nach dem vorhergehenden Anspruch, wobei das Gewichtsprozent der Zirconiumdioxid-Kristalle $ZrO_2$ oder der Zirconiumsilicat-Kristalle $ZrSiO_4$, welche in Form von äquivalentem Oxid ausgedrückt sind, in Bezug auf das Gesamtgewicht des Glaskeramikmaterials zwischen 2 % und 8 % liegt.

17. Herstellungsverfahren des Glaskeramikmaterials nach einem der Ansprüche 1 bis 16, die folgenden Stufen umfassend:

   a) Schmelzen

   • mindestens einer Verbindung, welche aus der Liste, umfassend Sassolin $H_3BO_3$, Quartz $SiO_2$, Dolomit $CaMg(CO_3)_2$, Calciumcarbonat $CaCO_3$, Zinkit ZnO, Kaolin $Al_2Si_2O_5(OH)_4$, Strontianit $SrCO_3$, Aluminiumoxid $Al_2O_3$, Calciumphosphat $Ca_3(PO_4)_2$, eine Zirconiumverbindung, welche aus Zirconiumdioxid $ZrO_2$ oder Zirconiumsilicat $ZrSiO_4$ ausgewählt ist, einen Alkalifeldspat, welcher aus Natronfeldspat $NaAlSi_3O_8$ und Kalkfeldspat $CaAl_2Si_2O_8$ ausgewählt ist, oder jede Kombination davon, ausgewählt ist,

bei einer Temperatur von zwischen 1400 °C und 1550 °C, und Fritten;
b) Mahlen der in Stufe a) erhaltenen Fritte mit zwischen 4 % und 15 Gew.-% Kaolin;
c) Bilden des in b) erhaltenen Produkts;
d) Sintern des in c) gebildeten Produkts mit einer Dauer von weniger als 120 Minuten bei Temperaturen von zwischen 980 °C und 1280 °C.

18. Verfahren nach dem vorhergehenden Anspruch, wobei die Prozentzahl der in der Mahlmischung von Stufe b) verwendeten Fritte zwischen 70 % und 96 Gew.-% liegt.

19. Verfahren nach einem der Ansprüche 17 oder 18, wobei die Stufe d) des Sinterns bei Temperaturen von zwischen 1100 °C und 1220 °C durchgeführt wird.

20. Verfahren nach einem der Ansprüche 17 bis 19, welches nach der Stufe des Sinterns (d) eine zusätzliche Stufe e) des Nacharbeitens und Polierens mit Schleifmitteln umfasst.

21. Verwendung des Glaskeramikmaterials nach einem der Ansprüche 1 bis 16 zum Herstellen von gewerblichen, strukturellen oder dekorativen keramischen Produkten.

22. Verwendung nach dem vorhergehenden Anspruch zum Herstellen von Bodenfliesen oder Glasuren von Bodenfliesen.

23. Verwendung des Glaskeramikmaterials nach einem der Ansprüche 1 bis 16 als thermischen Isolator.

## Revendications

1. Matériau vitrocéramique qui donne une sensation de chaleur thermique, **caractérisé en ce qu'**il a une conductivité thermique entre 0,25 et 0,5 $Wm^{-1}K^{-1}$ et comprenant

- des microcristaux et nanocristaux d'albite $NaAlSi_3O_8$,
- des microcristaux et nanocristaux d'anorthite $CaAl_2Si_2O_8$ ;
- et une phase vitreuse,

où les microcristaux sont séparés par une région formée par les nanocristaux et la phase vitreuse, où ladite phase vitreuse est dans une proportion inférieure à 18 % par rapport au poids total du matériau vitrocéramique, où les microcristaux d'albite ont des morphologies longilignes avec un plus petit diamètre entre 0,3 $\mu$m et 1,5 $\mu$m et un plus grand diamètre entre 1,5 $\mu$m et 8 $\mu$m,
où les microcristaux d'anorthite ont des morphologies longilignes avec un plus petit diamètre entre 0,2 $\mu$m et 0,5 $\mu$m et un plus grand diamètre entre 5 $\mu$m et 30 $\mu$m,
et où ledit matériau contient au moins un pourcentage en poids par rapport au matériau fini exprimé en termes d'oxydes équivalents suivants :

- entre 45 % et 68 % de $SiO_2$,
- entre 15 % et 27 % de $Al_2O_3$,
- entre 4,5 % et 13 % de $CaO$,
- entre 0 % et 9 % de $SrO$,
- entre 1 % et 5,5 % de $Na_2O$,
- entre 1 % et 5 % de $K_2O$,
- entre 0 % et 2 % de $B_2O_3$,
- entre 0 % et 14 % de $ZrO_2$,
- et entre 0 % et 5 % de $MgO$, $BaO$ et $ZnO$.

2. Matériau vitrocéramique selon la revendication précédente, où le pourcentage en poids par rapport au matériau fini exprimé en termes d'oxyde équivalent de $SiO_2$ est entre 49 % et 60 %.

3. Matériau vitrocéramique selon l'une quelconque des revendications précédentes 1 ou 2, où le pourcentage en poids par rapport au matériau fini exprimé en termes d'oxyde équivalent de $Al_2O_3$ est entre 17 % et 25 %.

**4.** Matériau vitrocéramique selon la revendication précédente, où le pourcentage en poids par rapport au matériau fini exprimé en termes d'oxyde équivalent de $Al_2O_3$ est entre 19 % et 23 %.

**5.** Matériau vitrocéramique selon la revendication 1, où le pourcentage en poids par rapport au matériau fini exprimé en termes d'oxyde équivalent de CaO est entre 6 % et 12 %.

**6.** Matériau vitrocéramique selon la revendication précédente, où le pourcentage en poids par rapport au matériau fini exprimé en termes d'oxyde équivalent de CaO est entre 7,5 % et 11 %.

**7.** Matériau vitrocéramique selon la revendication 1, où le pourcentage en poids par rapport au matériau fini exprimé en termes d'oxyde équivalent de $Na_2O$ est entre 1,5 % et 4 %.

**8.** Matériau vitrocéramique selon la revendication précédente, où le pourcentage en poids par rapport au matériau fini exprimé en termes d'oxyde équivalent de $Na_2O$ est entre 2 % et 3,5 %.

**9.** Matériau vitrocéramique selon la revendication 1, où le pourcentage en poids par rapport au matériau fini exprimé en termes d'oxyde équivalent de $Na_2O$ est entre 1,5 % et 4 %.

**10.** Matériau vitrocéramique selon la revendication précédente, où le pourcentage en poids par rapport au matériau fini exprimé en termes d'oxyde équivalent de $Na_2O$ est entre 2 % et 3 %.

**11.** Matériau vitrocéramique selon l'une quelconque des revendications précédentes 1 à 10, où

    • il comprend en outre des cristaux de zircone $ZrO_2$ ou des cristaux de silicate de zirconium $ZrSiO_4$, où lesdits cristaux sont répartis sur la région des nanocristaux et la phase vitreuse qui séparent les microcristaux du matériau vitrocéramique,

et dans lequel le matériau libère une conductivité thermique entre 0,31 et 0,45 $Wm^{-1}K^{-1}$.

**12.** Matériau vitrocéramique selon la revendication précédente, où les cristaux de zircone $ZrO_2$ peut être sous la forme cubique, tétragonale ou monoclinique.

**13.** Matériau vitrocéramique selon l'une quelconque des revendications précédentes 11 ou 12, où les cristaux de zircone $ZrO_2$ ont une taille moyenne entre 50 et 200 nm.

**14.** Matériau vitrocéramique selon la revendication 13, où les cristaux de zircone $ZrSiO_4$ ont une taille moyenne entre 200 et 500 nm.

**15.** Matériau vitrocéramique selon l'une quelconque des revendications précédentes 13 à 16, où le pourcentage en poids des cristaux de zircone $ZrO_2$ ou des cristaux de silicate de zircone $ZrSiO_4$ exprimés en oxyde équivalent par rapport au poids total du matériau vitrocéramique est entre 2 % et 14 %.

**16.** Matériau vitrocéramique selon la revendication précédente, où le pourcentage en poids des cristaux de zircone $ZrO_2$ ou des cristaux de silicate de zircone $ZrSiO_4$ exprimés en oxyde équivalent par rapport au poids total du matériau vitrocéramique est entre 2 % et 8 %.

**17.** Procédé de production du matériau vitrocéramique selon l'une quelconque des revendications 1 à 16, comprenant les étapes suivantes :

    a) fondre

        • au moins un composé choisi dans la liste comprenant le sassolite $H_3BO_3$, le quartz $SiO_2$, le dolomite $CaMg(CO_3)_2$, le carbonate de calcium $CaCO_3$, la zincite ZnO, le kaolin $Al_2Si_2O_5(OH)_4$, la strontianite $SrCO_3$, l'alumine $Al_2O_3$, le phosphate de calcium $Ca_3(PO_4)_2$ un composé de zirconium choisi parmi la zircone Zr02 ou le silicate de zirconium $ZrSiO_4$, un feldspath alcalin choisi parmi l'albite $NaAlSi_3O_8$ et l'anorthite $CaAl_2Si_2O_8$, ou toute combinaison de ces dernières,

à une température entre 1400 ºC et 1550 ºC, et frittage ;

b) moudre la fritte obtenue à l'étape a) avec 4 % et 15 % en poids de kaolin ;

c) formation du produit obtenu dans b) ;

d) fritter le produit formé dans c) durant moins de 120 minutes à des températures entre 980 ºC et 1280 ºC.

18. Procédé selon la revendication précédente, où le pourcentage en poids de la fritte utilisée dans le mélange de moulure de l'étape b) est entre 70 % et 96 % en poids.

19. Procédé selon l'une quelconque des revendications 17 ou 18, où l'étape d) de frittage est réalisée à des températures entre 1100 ºC et 1220 ºC.

20. Procédé selon l'une quelconque des revendications 17 à 19, comprenant une étape supplémentaire e), après l'étape de frittage (d), de rectification et de lustrage avec des abrasifs.

21. Utilisation du matériau vitrocéramique selon l'une quelconque des revendications précédentes 1 à 16, pour la fabrication de produits en céramique industriels, structurels ou ornementaux.

22. Procédé selon la revendication précédente, pour la fabrication de carreaux de sol ou de revêtements de carreaux de sol.

23. Utilisation du matériau vitrocéramique selon l'une quelconque des revendications précédentes 1 à 16, comme isolant thermique.

FIG. 1

FIG. 2

FIG. 3

FIG. 4

FIG. 5

FIG. 6

FIG. 7

FIG. 8

FIG. 9.

FIG. 10

FIG. 11.

FIG. 12.

FIG. 13.

FIG. 14.

FIG. 15.

FIG. 16.

FIG. 17.

FIG. 18.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005041741 B
- JP 2005133337 B
- JP 2005139797 B
- JP 2005139796 B
- WO 2013095308 A
- WO 2008122677 A
- US 3445252 A
- US 5017519 A
- ES 2444740
- EP 2759524 A

**Non-patent literature cited in the description**

- **A. JEZOWSKI et al.** Influence of crystallite size on the thermal conductivity in BaTiO3 nanoceramics. *Appl. Phys. Lett.,* 2007, vol. 90, 114104
- **W PABST ; E GREGOROVÁ.** The sigmoidal average - a powerful tool for predicting the thermal conductivity of composite ceramics. *J. Phys. Conf. Ser.,* 2012, vol. 395, 012021
- **A.TUNALI et al.** Production and characterisation of granulated frit to achieve anorthite based glass-ceramic glaze. *J. Eur. Ceram. Soc.,* 2015, vol. 35, 1089-1095
- **C. LIU et al.** Crystallization of Anorthite-Seeded Albite Glass by Solid-State Epitaxy. *J. Am. Ceram Soc.,* 1992, vol. 75 (10), 26675-80